# EUROPÄISCHE PATENTSCHRIFT

(11) **EP 2 175 569 B1**
(45) Veröffentlichungstag und Bekanntmachung des Hinweises auf die Patenterteilung: **25.09.2013**
(21) Anmeldenummer: 08017560.7
(22) Anmeldetag: 07.10.2008
(51) Int. Cl.: H04B 1/7163

(54) **Sendevorrichtung zur Erzeugung eines analog modulierten Impulszuges und zur Aussendung desselben sowie Empfangsvorrichtung zum Empfang eines entsprechenden Signals**
Transmission device for creating an analog modulated pulse train and for transmitting the same and reception device for receiving a corresponding signal
Dispositif d'émission destiné à la production d'un flux d'impulsion modulé analogique et à l'émission de celui-ci, ainsi que dispositif de réception destiné à la réception d'un signal correspondant

(43) Veröffentlichungstag der Anmeldung: 14.04.2010
(73) Patentinhaber: Universität Ulm, 89081 Ulm (DE)
(72) Erfinder: Schleicher, Bernd, 80687 München (DE); Schumacher, Hermann, 89134 Blaustein (DE)
(74) Vertreter: Pfenning, Meinig & Partner GbR

(56) Entgegenhaltungen:
- EP-A- 1 489 802
- EP-A- 1 526 693
- WO-A-2005/053168
- WO-A-2005/067242
- WO-A-2006/052462
- GB-A- 2 431 832
- US-A1- 2004 174 928
- US-A1- 2005 100 076
- US-A1- 2006 078 041

## Beschreibung

Die vorliegende Erfindung bezieht sich auf eine Sendevorrichtung zur Erzeugung eines analog modulierten Impulszuges und zur Aussendung desselben sowie auf eine Empfangsvorrichtung zum Empfang eines von einer Sendevorrichtung ausgesandten, analog modulierten Impulszuges. Die vorliegende Erfindung bezieht sich darüberhinaus auf entsprechende Sende- und Empfangsverfahren. Die Aussendung bzw. der Empfang können dabei über geeignete Antennen durchgeführt werden, es ist jedoch auch denkbar, die vorliegende Erfindung im Rahmen von beispielsweise kabelbasierten Systemen einzusetzen. Das Einsatzgebiet der vorliegenden Erfindung betrifft dabei insbesondere den UWB-Bandbereich (aus dem Englischen: ultra-wide band) und hierbei insbesondere Bänder, wie sie in der Entscheidung der EU-Kommission vom 21. Februar 2007 (Az. K(2007)522; 2007/131/EG) oder in dem Federal Communications Commission Report vom 22. April 2002 (FCC 02-48) von der Federal Communications Commission, Washington D.C. 20554 definiert sind.

Die US 2006/078041 A1 zeigt eine Sendevorrichtung, mit der eine Impulsfolge im UWB-Frequenzbereich abgestrahlt und empfangen werden kann. Dabei weist eine Trägerwellen-Verarbeitungseinheit neben einem Modulator, der die Eingangsdaten des Basisbandes mit einem vorgegebenen Modulationsverfahren wie beispielsweise der Phasenmodulation moduliert, auch einen Impulsgenerator auf. Die modulierte Impulsfolge wird im UWB-Frequenzband abgestrahlt.

Auch die GB 2 431 832 A zeigt die Abstrahlung von Impulsen im UWB-Bereich. Dabei sind verschiedene Modulationstechniken möglich. Zum Senden wird die Polarität der zu übertragenden UWB-Pulse moduliert.

Die digitale Modulation von Ultra-Breitband-Impulsen (nachfolgend auch UWB-Impulsen) ist aus dem Stand der Technik bereits bekannt (siehe z.B. Faranak Nekoogar "Ultra-Wideband Communications: Fundamentals und Applications", Prentice Hall, 2005). Darüberhinaus nutzen bekannte Amplitudenmodulations- (nachfolgend: AM) und/oder Frequenzmodulations- (nachfolgend: FM) Übertragungsarten oder digitale Übertragungsarten andere Frequenzbänder. So werden beispielsweise Basisbandimpulse durch digitale Modulationsarten von Einzelimpulsen moduliert (On-Off-Keying, diskrete Puls-Amplituden-Modulation, diskrete Puls-Positions-Modulation, ...).

Nachteilig an den bisher bekannten Verfahren ist insbesondere, dass sie sich nicht zu einer einfachen Konversion existierender Kurzstrecken-Übertragungssysteme auf den UWB-Bereich, insbesondere auf die oben erwähnten UWB-Bänder, eignen.

Aufgabe der vorliegenden Erfindung ist es daher, eine Sendevorrichtung und eine Empfangsvorrichtung zur Verfügung zu stellen, mit der auf einfache, zuverlässige und störsichere Art und Weise im UWB-Bereich Signalübertragungen realisiert werden können. Aufgabe ist es darüber hinaus, eine entsprechende Sendevorrichtung und Empfangsvorrichtung zur Verfügung zu stellen, mit welcher existierende Kurzstrecken-Übertragungssysteme im UWB-Bereich eingesetzt werden können. Schließlich ist es darüber hinaus noch die Aufgabe der vorliegenden Erfindung, entsprechende Sende- und/oder Empfangsverfahren zur Verfügung zu stellen.

Die vorstehend genannte Aufgabe wird durch eine Sendevorrichtung gemäß Anspruch 1, durch eine Empfangsvorrichtung gemäß Anspruch 7, durch eine Sende- und Empfangsvorrichtung gemäß Anspruch 12 sowie durch ein Sendeverfahren und/oder Empfangsverfahren nach Anspruch 13 gelöst. Vorteilhafte Ausgestaltungsformen lassen sich dabei jeweils den abhängigen Ansprüchen entnehmen.

Die vorliegende Erfindung wird nun zunächst allgemein beschrieben. Dieser allgemeinen Beschreibung sind verschiedene Beispiele für erfindungsgemäße Sendevorrichtungen oder für erfindungsgemäße Empfangsvorrichtungen zur Seite gestellt. Die im Rahmen der nachfolgend beschriebenen Beispiele realisierten Sende- und/oder Empfangsvorrichtungen müssen im Rahmen der vorliegenden Erfindung allerdings nicht in den gezeigten Beispielkonfigurationen realisiert werden, sondern können im Rahmen der vorliegenden Erfindung bzw. der Patentansprüche auch mit anderen Merkmalskombinationen realisiert sein bzw. verwendet werden.

Der Kern der vorliegenden Erfindung ist die analoge Modulation der Hüllkurve und/oder die analoge Modulation der Position eines Impulszuges auf der Senderseite und eine entsprechende Demodulation auf der Empfängerseite. Durch Umsetzung dieser Grundidee können existierende Kurzstrecken-Übertragungssysteme, die z.B. die FM als Modulationsart verwenden, sehr einfach an das neue Nutzerspektrum bzw. an die UWB-Bandbreite angepasst werden. Die vorliegende Erfindung ermöglicht somit durch kontinuierliche, analoge Modulation der Hüllkurve und/oder durch analoge Modulation der Position eines Basisbandimpulszuges eine Funk- oder auch Kabelübertragung analoger oder digitaler Signale, die insbesondere in neu lizenzierten, noch kaum genutzten UWB-Frequenzbändern stattfinden kann.

Das zu übertragende Analogsignal kann beispielsweise als amplitudenmoduliertes (AM) oder frequenzmoduliertes (FM) Signal vorliegen, ein zu übertragendes digitales Datensignal kann beispielsweise als phasenumtastendes (PSK, aus dem englischen Phase Shift Keying) oder quadraturamplitudenmoduliertes (QAM) Signal vorliegen.

Erfindungsgemäß wird ein wie nachfolgend noch genauer beschrieben erzeugter Impulszug mit diesem Signal moduliert. Bei einem gleichanteilfreien Impuls kann dann die Übertragung über konventionelle, eine breitbandige Übertragung erlaubende Antennen, wie sie dem Fachmann bekannt sind, erfolgen. Die Übertragung kann dabei wie vorbeschrieben insbesondere neu lizenzierte Frequenzbänder für UWB-Impulse nutzen.

Zur Demodulation auf der Empfängerseite werden erfindungsgemäß die gleichanteilfreien Impulse zunächst in Impulse mit einem Gleichanteil (durch eine geeignete nichtlineare Operation, beispielsweise Gleichrichten oder Quadrieren) umgewandelt.
Durch geeignete Filterung, insbesondere durch Bandpassfilterung, wird die erste oder eine der höheren Spektrallinien bzw. Frequenzlinien selektiert. Jede dieser Spektrallinien enthält die gewählte Modulationsart. Anschließend kann eine Demodulation mit gängigen Methoden erfolgen (z.B. AM-, FM-, PSK- oder QAM-Demodulation).

Die vorliegende Erfindung lässt sich so beispielsweise schlagwortartig durch amplitudenmoduliertes Impuls-UWB, analoge Pulsamplitudenmodulation, frequenzmoduliertes Impuls-UWB, analoge Pulspositionsmodulation, PSK-UWB, QAM-UWB usw. beschreiben.

Durch die vorliegende Erfindung können insbesondere existierende Kurzstrecken-Übertragungssysteme, die z.B. FM als Modulationsart verwenden, sehr einfach an das neue Nutzerspektrum des UWB-Bandes angepasst werden. Die Übertragung kann daher im neu lizenzierten, noch kaum genutzten UWB-Frequenzband stattfinden. Die erfindungsgemäßen Sende- und/oder Empfangsvorrichtungen sind robust gegen Störer, die sich im Band befinden. Das Sende- und/oder Empfangsverfahren ist mehrbenutzerfähig durch Wahl einer anderen Sendeträgerfrequenz am Eingang des Impulsgenerators und entsprechender Anpassung der Frequenzen im Empfänger. Insbesondere sind im Rahmen der vorliegenden Erfindung einfache Sende- und/oder Empfangssysteme möglich. So kann in einem einfachen Beispiel das Signal eines frequenzmodulierten Handfunksprechgerätes z.B. im VHF-Bereich zunächst auf einen UWB-Impulszug aufmoduliert werden. Das UWB-Signal kann dann per UWB-Funkübertragung zwischen zwei Orten übertragen werden. Im Empfänger kann dann das FM-Signal zurückgewonnen und über ein gleichartiges FM-Handfunkgerät wiedergegeben werden.

Sendevorrichtungen und/oder Empfangsvorrichtungen gemäß der vorliegenden Erfindung können insbesondere im Bereich der Übertragung von Audiosignalen eingesetzt werden. Bei den zu übertragenden Signalen (nachfolgend auch als Informationssignale bezeichnet) kann es sich aber auch ganz allgemein um zwischen einzelnen Geräteeinheiten zu übertragende Kommunikationssignale, digitale Signale, Steuer- und/oder Regelsignale oder auch um Sprachsignale etc. handeln.

Nachfolgend wird die vorliegende Erfindung nun anhand mehrerer Ausführungsbeispiele beschrieben.

Dabei zeigen:
- Figuren 1a und 1b: eine FM-basierte Sendevorrichtung gemäß der Erfindung sowie ein Beispiel für eine analoge Pulspositionsmodulation bzw. Fre- quenzmodulation von Impulsen.
- Figuren 2a bis 2d: eine AM-basierte Sendevorrichtung gemäß der vorliegenden Erfindung (Figur 2a), einen nicht-modulierten trägerlosen Ba- sisbandimpulszug im Zeitbereich (Figur 2b) sowie im Frequenzbereich (Figur 2c) und eine analoge Pulsamplitudenmodulation bzw. ein mit einem analogen Modulations- schema hinsichtlich der Amplitude seiner Einzelpulse analog modulierter Impulszug (Figur 2d).
- Figur 3: eine quadraturamplitudenmodulationsba- sierte Sendevorrichtung gemäß der Erfin- dung.
- Figuren 4a bis 4d: ein einfaches Empfängerkonzept im Rahmen der vorliegenden Erfindung (Figur 4a), ein gleichgerichteter Impulszug im Falle der Amplitudenmodulation (Figur 4b), ein gleichgerichteter Impulszug im Falle ei- ner Frequenzmodulation (Figur 4c) sowie ein Spektrum des gleichgerichteten Im- pulszuges im Frequenzbereich (Figur 4d).
- Figur 5: ein alternatives Empfängerkonzept im Rah- men der vorliegenden Erfindung, mit dem die spektrale Effizienz der Empfangsseite verbesserbar ist.
- Figur 6: ein weiteres alternatives Empfängerkon- zept im Rahmen der vorliegenden Erfin- dung.

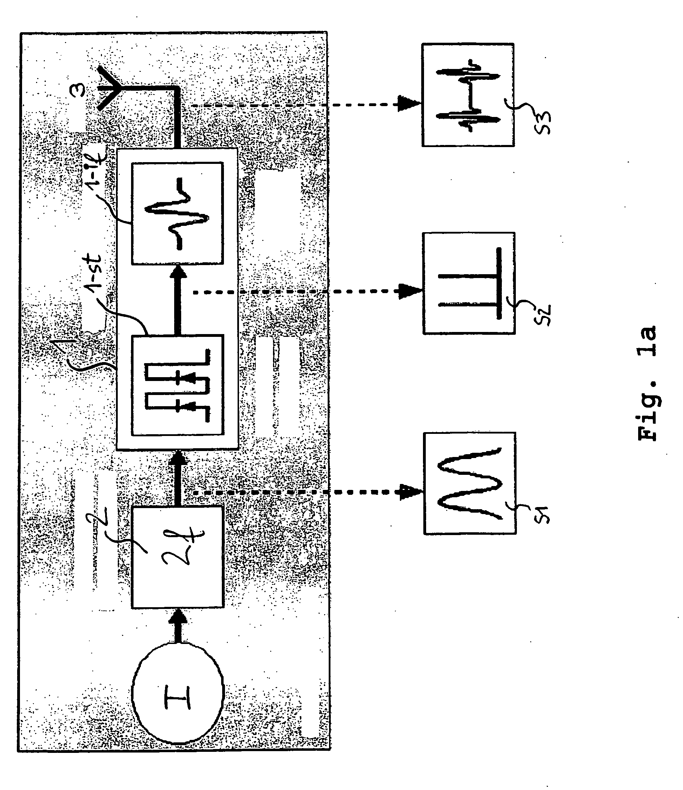

Figur 1a zeigt eine erste erfindungsgemäße Sendevorrichtung zur Erzeugung eines analog modulierten Impulszuges und zur Aussendung desselben. Die Sendevorrichtung umfasst einen Impulsgenerator 1, mit dem ein Impulszug mit einer Einzelpulsform erzeugt wird, die im Frequenzbereich in eine vordefinierte UWB-Frequenzmaske fällt. Dabei kann es sich beispielsweise um die vorbeschriebenen, durch die EU-Kommission oder durch die FCC festgelegten UWB-Frequenzmasken handeln. Mit dem Impulsgenerator 1 ist eine Modulationseinheit 2 verbunden, mit der ein mit dem Impulsgenerator 1 zu erzeugender Impulszug mittels eines FM-Modulationsschemas hinsichtlich der Position seiner Einzelpulse analog modulierbar ist. Hierfür ist der Impulsgenerator 1 auf der Signaleingangsseite mit einer frequenzmodulierenden Einheit 2f (die hier die Modulationseinheit 2 ausbildet) verbunden. Die frequenzmodulierende Einheit 2f ist hier als analoger Frequenzmodulator ausgebildet, mit dem ein ihm zugeführtes Informationssignal I (beispielsweise ein zu übertragendes Sprachsignal oder ähnliches) modulierbar und als frequenzmoduliertes Trägersignal dem Impulsgenerator als Eingangssignal zuführbar ist (frequenzmoduliertes, sinusförmiges Eingangssignal S1 des Impulsgenerators 1).

Mit dem Impulsgenerator 1 wird nun aus dem Eingangssignal S1 ein entsprechend der Frequenzmodulation des Eingangssignals frequenzmodulierter Impulszug generiert, der im Frequenzbereich in die vordefinierte Frequenzmaske fällt. Hierzu weist der Impulsgenerator 1 eine Schwellwert-Triggereinheit 1-st auf, mit der aus dem zugeführten, frequenzmodulierten periodischen (sinusförmigen) Eingangssignal ein periodischer, frequenzmodulierter Zug von Impulsspitzen (Signal S2) erzeugt wird. Im vorliegenden Fall ist diese Triggereinheit 1-st auf Basis eines Begrenzungsverstärkers und eines kapazitiven Differenzierers gebildet (grundlegender Aufbau dem Fachmann bekannt).

Das frequenzmodulierte Impulsspitzensignal S2 wird im Impulsgenerator 1 dann durch die der Triggereinheit 1-st nachfolgende Impulsformungseinheit 1-if weiter so geformt, dass ein in die besagte Frequenzmaske fallender Impulszug erzeugt wird. Dies geschieht hier auf Basis eines von der Impulsformungseinheit 1-if umfassten, zum Zusammenfügen zweier Impulsformen ausgebildeten RLC-Schwingkreises (nicht gezeigt; der genaue Aufbau einer solchen Impulsformungseinheit ist dem Fachmann bekannt).

Signalausgangsseitig liegt somit am Impulsgenerator 1 ein frequenzmodulierter Impulszug S3 vor. Dieser Frequenzmodulierte Impulszug kann dann durch die signalausgangsseitig des Impulsgenerators 1 angeordnete und mit dem Impulsgenerator 1 verbundene Antenne 3 abgestrahlt werden. Die Antenne 3 ist dabei als Breitbandantenne so ausgebildet, dass sie über den gesamten Frequenzbereich der Frequenzmaske abstrahlen kann.

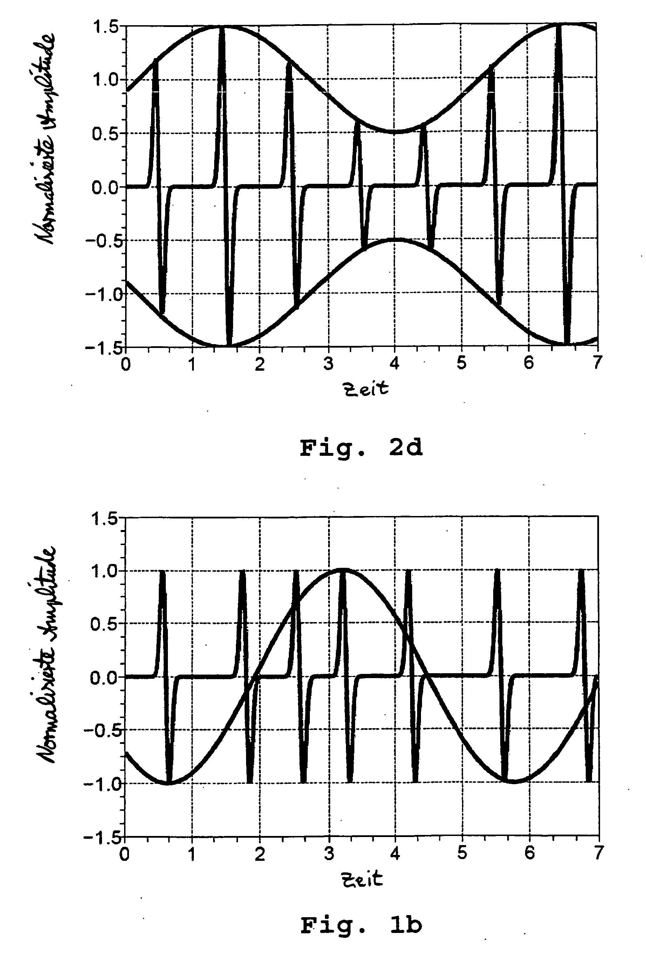

Figur 1b skizziert das Signal S3, also den am Ausgang des Impulsgenerators 1 anliegenden, einer analogen Pulspositionsmodulation bzw. einer analogen FM-Modulation unterworfenen Impulszug.

Figur 1 zeigt somit die Umsetzung der erfindungsgemäßen Idee auf der Senderseite dahingehend, dass trägerlose Basisbandimpulse (Impulszug) an ein existierendes, frequenzmodulierendes (FM) Modulationsschema angepasst wurden (wie nachfolgend noch näher beschrieben, kann erfindungsgemäß ebenso eine Anpassung an ein anderes Modulationsschema, wie beispielsweise ein Amplitudenmodulationsschema oder ein Quadraturamplitudenmodulationsschema erfolgen). Auf diese Art und Weise können bereits existierende Modulationstechniken (und auch Demodulationstechniken, siehe nachfolgende Beschreibung der Empfängerseite) verwendet werden, um beispielsweise eine Abstrahlung im UWB-Bereich zu ermöglichen. Die Übertragung kann jedoch ebenso auch auf kabelbasierten Systemen erfolgen. Als Informationssignale können beliebige Signale enthaltend analoge oder digitale Informationen verwendet werden. Beispielsweise kann es sich hierbei um Sprachsignale, Musiksignale oder Messdatensignale handeln. Diese Signale können dann erfindungsgemäß (aufgrund der niedrigen erlaubten spektralen Leistungsdichte der vorbeschriebenen UWB-Frequenzmasken) vor allen Dingen im Bereich der Kommunikation mit kurzer Reichweite eingesetzt werden. Die vorbeschriebene Sendevorrichtung (dies gilt ebenso für die noch folgenden Sende- oder Empfangsvorrichtungen) kann auf einfache Art und Weise und mit geringen Kosten realisiert werden.

Wie vorbeschrieben weist der Impulsgenerator 1 im vorliegenden Fall zwei Haupt-Blöcke auf: Die Schwellwert-Triggereinheit 1-st und die signalausgangsseitig dieser Einheit angeordnete Impulsformungseinheit 1-if. Die Schwellwert-Triggereinheit 1-st umfasst einen Schwellwertdetektor, durch den bei jedem Schwellwertereignis (Überschreiten einer bestimmten Signalschwelle) eine Impulsspitze erzeugt wird. So wird das einlaufende periodische Signal (beispielsweise: Sinus- oder Rechtecksignal) in einen periodischen Zug von Impulsspitzen mit einer Wiederholrate gemäß der zugeführten Frequenz (Frequenz des Signals S1) gewandelt. Der Impulsspitzenzug mit dieser Wiederholrate wird dann der Impulsformungseinheit 1-if zugeführt, die so ausgebildet ist, dass sie für jede Impulsspitze einen Basisbandimpuls abgibt. Mit der Impulsformungseinheit wird aus dem periodischen Zug von Impulsspitzen dann ein Impulszug, der im Frequenzbereich in die vordefinierte Frequenzmaske (bzw. in ein vordefiniertes Frequenzband) fällt: Die Form des Basisbandimpulses ist dann (bezüglich der mittleren Frequenz, der Impulsdauer, der genauen Impulsform etc. gesehen) so, dass der erzeugte Basisbandimpuls bezüglich seines Frequenzspektrums gesehen bzw. im Frequenzbereich in die vorbeschriebene Frequenzmaske passt. Die Schwellwert-Triggereinheit 1-st kann auf Basis eines Begrenzungsverstärkers und eines Differenzieres verwirklicht sein. Die Impulsformungseinheit 1-if ist hier auf Basis eines RLC-Schwingkreises realisiert und so angepasst, dass ihr Ausgangssignal durch eine stark gedämpfte Resonanz einen kurzen hochfrequenten Impuls erzeugt.

Der grundsätzliche Aufbau dieser Realisierungen ist dem Fachmann dabei bekannt (siehe z.B. J. Dederer et al.: "A SiGe impulse generator for single-band ultra-wideband applications", Semiconductor Science and Technology, vol. 22, pp. 200-203, 12/2006); es sind jedoch auch andere Realisierungen möglich: So können beispielsweise die Impulsspitzen im Impulsgenerator 1 durch kleine Zeitdifferenzen in digitalen Komponenten realisiert werden und die Impulsformung kann basierend auf der Verwendung von Oszillatoren mit LC-Schwingkreisen durchgeführt werden. Auch kann letztlich ein Prinzip eingesetzt werden, bei dem ein Impuls zur Einblendung von Abschnitten eines sinusförmigen Signals eines freilaufenden Oszillators verwendet wird.

Die in Figur 1a gezeigte Sendervariante der vorliegenden Erfindung hat insbesondere den Vorteil, dass einfache, preiswerte und ohne weiteres erhältliche Komponenten zur Modulation eingesetzt werden können (dies gilt ebenso für die nachfolgend noch beschriebene Demodulation bzw. die Empfangsseite). Damit ist es mit einem minimalen Aufwand an zusätzlichen Komponenten möglich, das UWB-Frequenzband zu nutzen. Insbesondere kann somit auf einfache Art und Weise das Informationssignal I auf das UWB-Frequenzband umgesetzt werden, indem ein konventioneller FM-Modulator (oder ein konventioneller Frequenzumtast-Modulator bzw. FSK-Modulator) 2f verwendet wird, um das entsprechend modulierte Informationssignal I als Eingangssignal S1 der Schwellwert-Triggereinheit 1-st des Impulsgenerators 1 zu zuführen. Das Ausgangssignal S1 der frequenzmodulierenden oder frequenzumtastenden Einheit 2f ist somit ein frequenzmoduliertes Trägersignal S1, beispielsweise ein Radiofrequenzsignal mit einer Trägerfrequenz von 90 MHz und einer angewandten FM-Modulation, wie es beispielsweise in konventionellen UKW-Radios verwendet wird. Indem dann dieses Signal auf den Eingang des Impulsgenerators 1 bzw. die Schwellwert-Triggereinheit 1-st gegeben wird, werden frequenzmodulierte Impulsspitzen mit einer mittleren Wiederholrate von 90 MHz, die dann gemäß des frequenzmodulierten Eingangssignals S1 moduliert sind, erzeugt. Die nachfolgende Impulsformungseinheit 1-if erzeugt daraus frequenzmodulierte UWB-Impulse. Demgemäß wird also kein Signal im UKW-Bereich abgestrahlt, sondern das Signal wird auf den UWB-Freuquenzbereich umgesetzt und dann abgestrahlt. Durch geeignete Impulsformung mittels der Impulsformungseinheit 1-if belegt das abgestrahlte Signal dann die gesamte zulässige Bandbreite (mit den entsprechend zulässigen spektralen Intensitäten) des UWB-Bandes bzw. der entsprechenden UWB-Frequenzmaske. Die grundlegende Idee der vorliegenden Erfindung kann somit auch als ein Umsetzen des Signals von konventionellen FM-Überträgern (bzw., siehe nachfolgend, von AM- oder QAM-Überträgern) in das UWB-Frequenzspektrum und umgekehrt angesehen werden.

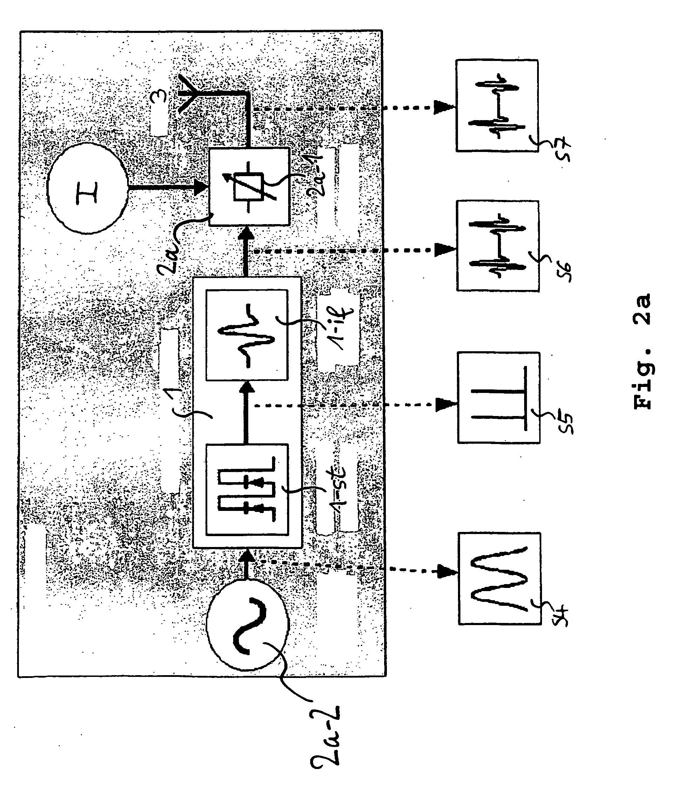

Figuren 2a bis 2d zeigen eine erfindungsgemäße Sendevorrichtung, die auf Basis einer Amplitudenmodulation arbeitet. Der Aufbau dieser Sendevorrichtung ist dabei grundsätzlich ähnlich zum Aufbau der in Figur 1a gezeigten Sendevorrichtung, so dass entsprechende Elemente mit entsprechenden Bezugszeichen versehen sind und im einzelnen nicht mehr beschrieben werden (entsprechendes gilt auch für die nachfolgenden weiteren Ausführungsbeispiele auf der Sender- und/oder Empfängerseite).

Bei der AM-Modulation weist die Modulationseinheit 2 eine signaleingangsseitig mit der Signalausgangsseite des Impulsgenerators 1 verbundene amplitudenmodulierende Einheit 2a auf. Diese ist hier als analoger Amplitudenmodulator ausgebildet. Statt der amplitudenmodulierenden Einheit kann jedoch auch eine amplitudenumtastende Einheit 2a vorgesehen sein, die beispielsweise einen ASK-Modulator aufweist.

Dieser auf der Signalausgangsseite des Impulsgenerators 1 angeordneten Einheit wird dann das entsprechende Informationssignal I zugeführt. Die amplitudenmodulierende Einheit 2a moduliert dann mit dem zugeführten Informationssignal den am Ausgang des Impulsgenerators abgegriffenen, nicht-modulierten, im Frequenzbereich in die vordefinierte Frequenzmaske fallenden Impulszuges (der dann in dieser durch die amplitudenmodulierende Einheit 2a amplitudenmodulierten Form über die Antenne 3 abgestrahlt wird).

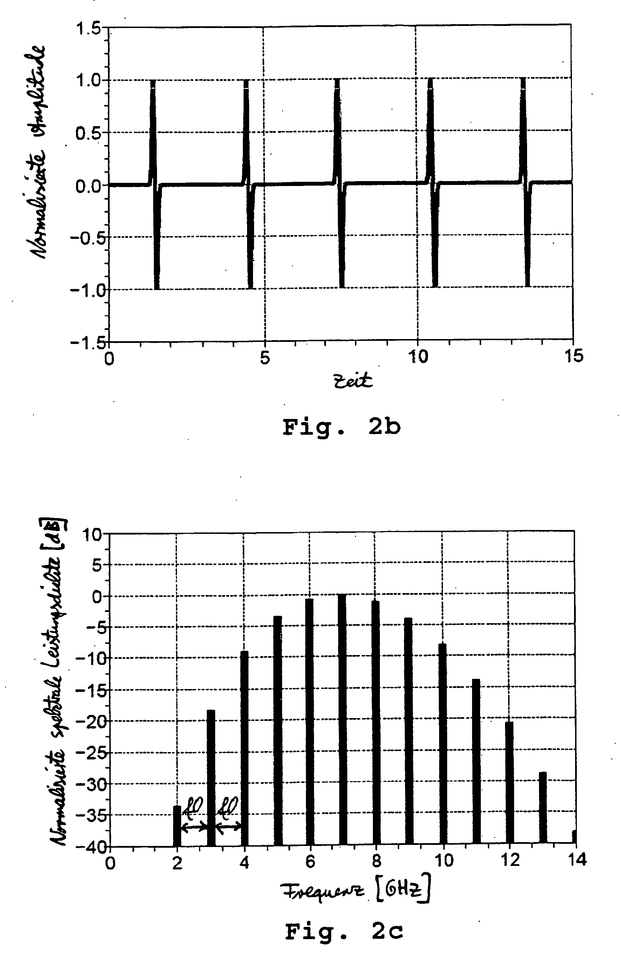

Der am Signalausgang des Impulsgenerators 1 abgreifbare, nicht-modulierte, in die UWB-Frequenzmaske fallende Impulszug wird hier wie folgt erzeugt: Auf der Signaleingangsseite des Impulsgenerators 1 ist eine ein periodisches, hier sinusförmiges, nicht-moduliertes Trägersignal erzeugende Einheit 2a-2 angeordnet. Deren periodisches, nicht-moduliertes Sinussignal S4 wird der Schwellwert-Triggereinheit 1-st des Impulsgenerators 1 zugeführt. Die Triggereinheit 1-st erzeugt aus diesem Signal eine periodische Impulsspitzenfolge S5, aus der mittels der Impulsformungseinheit 1-if der regelmäßige, nicht-modulierte, im Frequenzbereich in die vordefinierte UWB-Frequenzmaske fallende Impulszug S6 generiert wird. Der Impulszug S6 ist in den Figuren 2b (im Zeitbereich) und 2c (im Frequenzbereich) im Detail gezeigt. Wie insbesondere Figur 2c zeigt, ist die Impulsformungseinheit 1-if des Impulsgenerators so ausgebildet, dass das Spektrum des kontinuierlichen Impulszuges hinsichtlich der Lage der einzelnen Frequenzen und hinsichtlich der spektralen Intensität der einzelnen Frequenzen in die vordefinierte UWB-Frequenzmaske passt. Die einzelnen diskreten Linien im Frequenzbereich stammen von der konstanten Wiederholrate der Impulse. Diese Linien sind mit der spektralen Hüllkurve der einzelnen Basisbandimpulse gewichtet. Die Wiederholrate der einzelnen Impulse legt dabei den spektralen Abstand der einzelnen Linien im Frequenzbereich fest (Abstand zweier benachbarter Linien in Figur 2c). Wie Figur 2c zeigt, weist das Impulsspektrum insbesondere keinen Gleichanteil auf (dieser wäre durch die Antenne 3 nicht übertragbar).

Die auf der Signalausgangsseite des Impulsgenerators 1 angeordnete amplitudenmodulierende Einheit 2a weist nun einen steuerbaren Amplitudensteller 2a-1 auf, mit dem die Amplitude der Einzelpulse des Ausgangssignals S6 des Impulsgenerators 1 entsprechend der momentanen Amplitude des der amplitudenmodulierenden Einheit 2a zugeführten Informationssignals I einstellbar ist (amplitudenmodulierter Impulszug als analoge Pulsamplitudenmodulation der Amplituden der einzelnen Impulse des Impulszuges S6, siehe Figur 2d).

Auf diese Art und Weise kann der Impulszug S7 als amplitudenmodulierter Impulszug in Übereinstimmung mit der festgelegten UWB-Frequenzmaske über die Antenne 3 abgestrahlt werden.

Im Fall der AM-Modulation (oder der Amplitudenumtastungs-Modulation bzw. dem ASK-Schema für digitale Signale) ist somit das dem Impulsgenerator zugeführte Signal ein nicht-moduliertes, kontinuierliches, periodisches (z.B. sinusförmiges oder rechteckförmiges) Signal, das die Trägerfrequenz der Übertragung festlegt. Dieses Signal wird dann im Impulsgenerator in den kontinuierlichen, noch nicht amplitudenmodulierten Impulszug gewandelt. Für die nachfolgende Amplitudenmodulation ist es dann notwendig, eine zusätzliche Komponente in Form des elektronisch steuerbaren Amplitudenstellers 2a-1 am Signalausgang des Impulsgenerators anzuordnen. Das Informationssignal I bestimmt dann bei der Amplitudenmodulation die Veränderung der Amplitude der einzelnen Impulse, somit werden amplitudenmodulierte Impulse im Impulszug erzeugt.

Aus den vorgestellten beiden Beispielen ist bereits ersichtlich, wie gemäß der Erfindung für einen Impulszug basierend auf einem konventionellen Modulationsschema, wie beispielsweise einem AM-, einem FM-, einem PSK- oder einem QAM-Modulationsschema (für letzteres siehe auch nachfolgendes Beispiel) die Amplitude und/oder die Position der einzelnen Impulse des Impulszuges variiert werden kann. Figur 1b zeigt hierbei einen rein frequenzmodulierten Impulszug, Figur 2d einen rein amplitudenmodulierten Impulszug. Die spektrale Form des Signals ändert sich dabei dergestalt, dass alle Spektrallinien durch die Modulation verbreitert werden, wohingegen die Hüllkurve unverändert bleibt (siehe Figur 2c). Die erfindungsgemäße Sendevorrichtung beeinflusst daher beispielsweise die Amplitude der Impulse im Fall der AM-Modulation, die Position der Impulse im Beispiel der FM-Modulation oder beide gleichzeitig im Fall der nachfolgend noch vorgestellten QAM-Modulation.

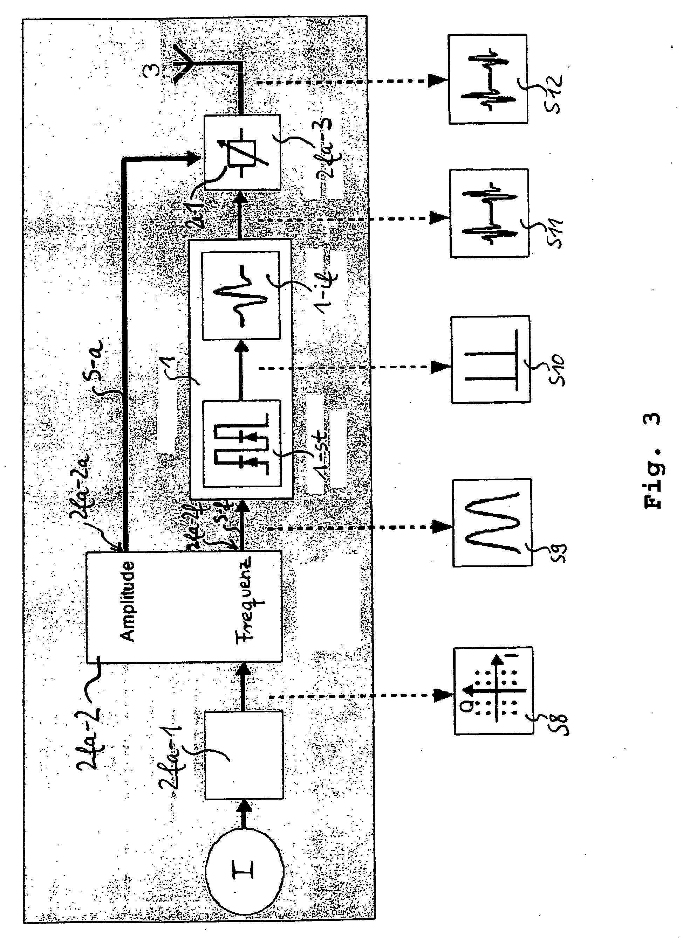

Figur 3 zeigt ein weiteres Beispiel einer erfindungsgemäßen Sendevorrichtung, bei der im Unterschied zu den beiden voranstehend beschriebenen Sendevorrichtungen die Modulationseinheit 2 wie folgt ausgebildet ist: Das Informationssignal I wird einer frequenzmodulierenden und amplitudenmodulierenden FM/AM-Einheit 2fa-1 zugeführt und in dieser in ein frequenz- und synchron dazu amplitudenmoduliertes Quadraturamplitudenmodulationssignal (nachfolgend auch: QAM-Signal) S8 gewandelt. Anstelle einer Quadraturamplitudenmodulation kann die Einheit 2fa-1 jedoch auch als eine frequenzumtastende und synchron dazu amplitudenumtastende, beispielsweise ein BPSK-Schema oder ein Vierphasen-Modulationsschema (QPSK-Schema) umsetzende Einheit ausgebildet sein.

Das frequenz- und amplitudenmodulierte Signal S8 wird dann einem Amplituden-Frequenz-Separator 2fa-2 der Modulationseinheit 2 zugeführt. Dieser Amplituden-Frequenz-Separator 2fa-2 zerlegt das frequenz- und synchron dazu amplitudenmodulierte Signal S8 in einen frequenzmodulierten Anteil S-f und einen amplitudenmodulierten Anteil S-a. Der frequenzmodulierte Anteil S-f wird dann über den Frequenzausgang 2fa-2f des Separators 2fa-2 der Schwellwert-Triggereinheit 1-st eines Impulsgenerators 1 (der wie vorbeschrieben aufgebaut ist) zugeführt. Der frequenzmodulierte Anteil S-f ist in Figur 3 auch als Signal S9 skizziert.

Das frequenzmodulierte Signal (z.B. ein frequenzmoduliertes Sinussignal) S9 wird durch die Schwellwert-Triggereinheit 1-st des Impulsgenerators 1 in eine periodische Folge von frequenzmodulierten Impulsspitzen S10 gewandelt, die dann wiederum durch die Impulsformungseinheit 1-if in einen frequenzmodulierten Impulszug (der wie vorbeschrieben in die UWB-Frequenzmaske eingepasst ist) S11 umgesetzt wird.

Mit dem Signalausgang des Impulsgenerators 1 ist eine amplitudenmodulierende Einheit 2fa-3 der Modulationseinheit 2 in Form eines analogen Amplitudenmodulators verbunden. Im Fall eines digitalen Signals kann jedoch anstelle der amplitudenmodulierenden Einheit 2fa-3 auch eine amplitudenumtastende Einheit, beispielsweise in Form eines ASK-Modulators, vorgesehen sein.

Dieser analoge Amplitudenmodulator 2fa-3 weist nun einen zweiten Signaleingang auf, der mit dem Amplitudenausgang 2fa-2a des Amplituden-Frequenz-Separators 2fa-2 verbunden ist. Über diesen Eingang wird dem Amplitudenmodulator 2fa-3 somit der amplitudenmodulierte Anteil S-a zugeführt. Der Amplitudenmodulator 2fa-3 moduliert mit diesem Anteil S-a den entsprechend des frequenzmodulierten Anteils S-f frequenzmodulierten Impulszug S11 zusätzlich hinsichtlich dessen Amplitude (also der Amplitude der einzelnen Impulse des bereits frequenzmodulierten Impulszuges), so dass am Signalausgang des Amplitudenmodulators 2fa-3 ein frequenz- und synchron dazu amplitudenmodulierter Impulszug S12 anliegt, der über die Antenne 3 abgestrahlt werden kann.

Die amplitudenmodulierende Einheit 2fa-3 weist hierbei wieder einen steuerbaren Amplitudensteller 2a-1 auf, mit dem die Amplitude der Einzelpulse des frequenzmodulierten Impulszuges S11 entsprechend der momentanen Amplitude des amplitudenmodulierten Anteils S-a einstellbar und somit das Signal S12 generierbar ist.

Figur 3 zeigt somit eine erfindungsgemäße Sendevorrichtung, die für ein Modulationsschema in Form eines Quadraturamplitudenmodulationsschemas (QAM-Schema) oder auch für ein binäres Phasenmodulationsschema (BPSK-Schema) oder ein Vierphasenmodulationsschema (QPSK-Schema) eingesetzt werden kann. Im Zeitbereich gesehen haben die Signale all dieser Schemata gemeinsam, dass sie sowohl eine Frequenzmodulation, als auch, synchron dazu, eine Amplitudenmodulation vorsehen. Für das Umsetzen beispielsweise eines konventionellen QAM-Überträgersignals auf ein UWB-Impulsbandsignal, ist hier u.a. die zusätzliche Komponente des Amplituden-Frequenz-Separators 2fa-2 notwendig, die die frequenzmodulierten Anteile (S-f) und die amplitudenmodulierten Anteile (S-a, d.h. die Hüllkurve) trennt. Das abgetrennte Frequenzsignal S-f wird dann verwendet, um den Impulszug mit einer Frequenzmodulation zu versehen, wohingegen der abgetrennte Amplitudenanteil S-a dazu verwendet wird, beispielsweise mit Hilfe eines elektronischen Amplitudensteller , zum Beispiel in Form eines elektronisch steuerbaren Dämpfgliedes, eines Verstärkers mit steuerbarer Verstärkung, eines Multiplizierers oder ähnlichem 2-fa-3 den Impulszug zusätzlich mit einer Amplitudenmodulation zu versehen.

Die gezeigte Sendevorrichtung kombiniert damit im Grunde die Verwendung der in den beiden ersten Ausführungsbeispielen beschriebenen Schemata (FM-Modulationsschema und AM-Modulationsschema), da nicht nur eine QAM-Quelle 2fa-1 wie in Figur 3 gezeigt, mit dem Eingangsanschluss des Amplituden-Frequenz-Separators 2fa-2 verbunden werden kann: Ebenso kann mit ihm eine reine FM-Quelle oder eine reine AM-Quelle verbunden werden. Mit diesen Quellen ist dann die jeweils andere Komponente am Ausgang des Separators konstant (d.h. für eine FM-Quelle ist die Amplitude konstant und für eine AM-Quelle ist die Frequenz konstant). Die in den Figuren 1a und 2a gezeigten Sendevorrichtungen können somit als Vereinfachungen der in Figur 3 gezeigten Sendevorrichtung angesehen werden.

Bei der erfindungsgemäßen Sendevorrichtung ist in der Regel die folgende Einschränkung zu beachten, wenn AM-Quellen oder QAM-Quellen in der Modulationseinheit 2 verwendet werden: In der amplitudenmodulierenden Einheit 2a bzw. 2fa-3 in Form eines elektronisch steuerbaren Dämpfgliedes kann keine negative Amplitude am Steuereingang des Dämpfgliedes gehandhabt werden. Eine negative Amplitude würde nämlich in der Übertragung eines invertierten Impulses resultieren, was mit einem Dämpfgliedes grundsätzlich nicht möglich ist. Grundsätzlich könnte dieses Problem dadurch umgangen werden, dass als Amplitudensteller ein Multiplizierer verwendet wird, durch die Gleichrichtungseinheit im Empfänger ist jedoch eine Trennung von negativen und positiven Impulsen nicht möglich. Dies beschränkt das AM-Schema der Modulation in der Regel auf eine Amplitudenmodulation ohne Trägerunterdrückung.

Beim QAM-Schema werden in diesem Fall die Eingabesignale auf eine Modulationsform beschränkt, bei der sie sich nicht in den negativen Q-Wertebereich des IQ-Plots erstrecken (der IQ-Plot ist eine Form eines Lissajous-Plots, in welcher die QAM-Signale üblicherweise dargestellt werden; siehe auch die Skizze beim Signal S8 in Figur 3 mit 16 Codepunkten, üblicherweise als 16 QAM bezeichnet).

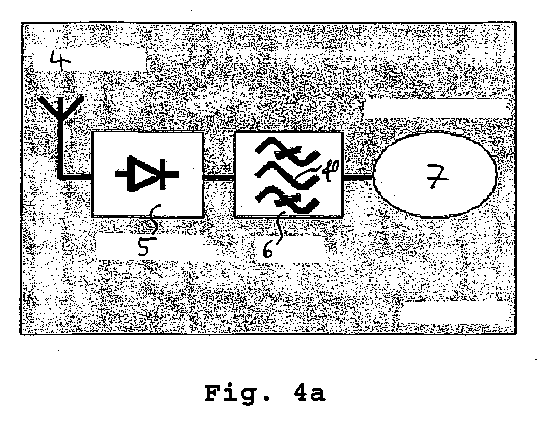

Auf der Empfangsseite muss erfindungsgemäß, um die Information auf den Impulsen des Impulszuges zu demodulieren, das Hochfrequenzspektrum gleichgerichtet werden, um die Impulsenergie aus dem UWB-Frequenzband auf tiefere Frequenzen umzusetzen. Figur 4a zeigt die einfachste Ausgestaltung einer erfindungsgemäßen Empfangsvorrichtung zum Empfang des von einer erfindungsgemäßen Sendevorrichtung ausgesandten, analog modulierten Impulszuges. Diese Empfangsvorrichtung umfasst eine zum Empfang des Impulszugs geeignete Empfangseinheit in Form einer Antenne 4, eine der Empfangseinheit nachgeschaltete Gleichrichtungseinheit 5 zur Gleichrichtung des Impulszuges nach dessen Empfang, einen der Gleichrichtungseinheit nachgeschalteten Frequenzfilter 6, der nur definierte Frequenzlinien durchlässt und eine dem Frequenzfilter nachgeschaltete Demodulationseinheit 7, mit dem der Impulszug nach seiner Filterung im Frequenzfilter mit einem Demodulationsschema gemäß des zu seiner Modulierung verwendeten Modulationsschemas demoduliert wird.

Die Gleichrichtungseinheit kann beispielsweise eine Diode umfassen, kann jedoch auch mittels eines beschalteten Vollweggleichrichters oder Quadriers ausgebildet sein. Der Frequenzfilter 6 ist vorteilhafterweise als Bandpassfilter ausgestaltet, der genau eine Frequenzlinie aus dem Frequenzspektrum des gleichgerichteten Impulszuges durchlässt und zwar bevorzugt die Grundfrequenz oder die der Frequenz der Wiederholrate der Einzelpulse des Impulszugs entsprechende Frequenzlinie (deren Frequenz nachfolgend auch mit f0 bezeichnet wird).

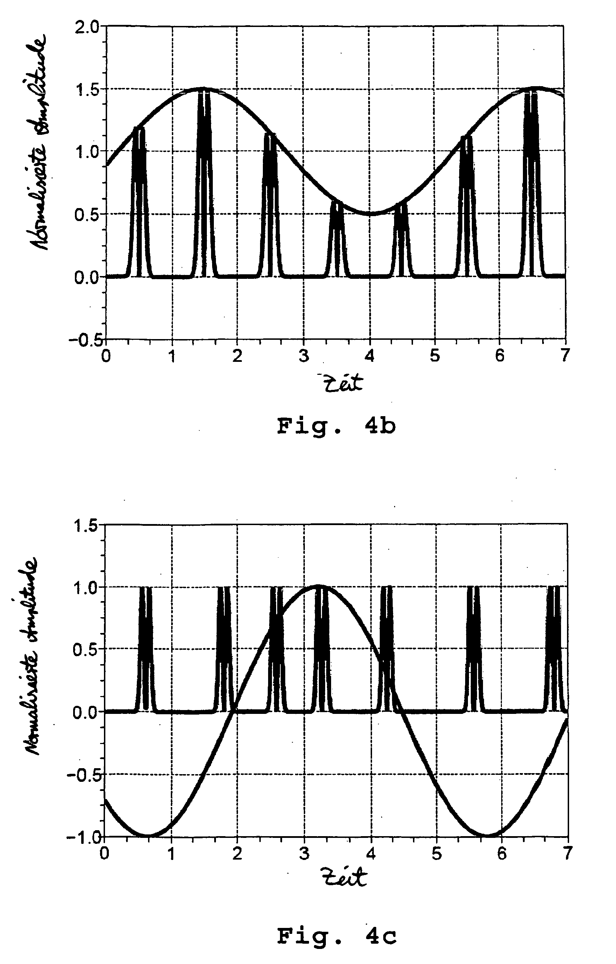

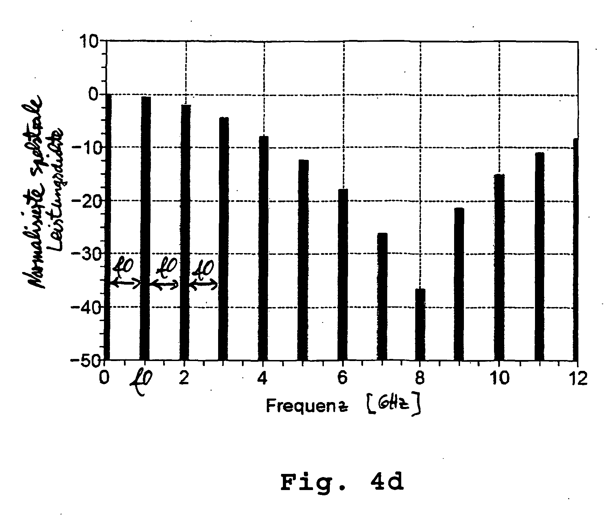

Figur 4b zeigt ein Beispiel für die gleichgerichteten Impulse im Impulszug im Falle der Amplitudenmodulation. Figur 4c zeigt entsprechend ein Beispiel für die Gleichrichtung der Impulse des Impulszuges durch die Gleichrichtungseinheit 5 im Falle der Frequenzmodulation. Wurde der Impulszug auf der Sendeseite mit einem AM-Modulationsschema, einem FM-Modulationsschema, einem PSK-Modulationsschema oder einem QAM-Modulationsschema moduliert, variiert die Amplitude und/oder die Position der Einzelpulse des Impulszuges gemäß dem verwendeten Modulationsschema (Figuren 4b und 4c zeigen eine Amplituden- bzw. Frequenzmodulation eines Basisband-Impulszuges). Bei der Modulation ändert sich die Form im Frequenzbereich so, dass sämtliche Spektrallinien bzw. Frequenzlinien durch die Modulation verbreitert werden, die Einhüllende bleibt jedoch unverändert. Die gleichgerichteten Einzelimpulse des Impulszuges tragen immer noch die Modulationsinformation (siehe ihre Form im Zeitbereich in Figuren 4b und 4c), ihr Spektrum im Frequenzbereich (siehe Figur 4d) weist jedoch nun auch einen Gleichanteil bei der Frequenz 0 auf. Die (abgesehen vom Gleichanteil) erste Frequenzlinie im Spektrum findet sich dann bei der Frequenz f0, also bei der Grundfrequenz oder der Wiederholrate der Einzelpulse. Die weiteren Frequenzlinien finden sich dann jeweils im Abstand von f0 (Abstand zweier benachbarter Frequenzlinien siehe Figur 4d), wobei auf jeder dieser (harmonischen) Frequenzen der aufmodulierte Inhalt vorhanden ist.

Mit dem Frequenzfilter 6, der hier als Bandpassfilter ausgebildet ist, wird dann vorteilhafterweise genau eine Frequenzlinie ausgewählt, bevorzugt handelt es sich hierbei um die Frequenzlinie bei der Grundfrequenz f0 (es kann jedoch auch die Frequenzlinie bei der Frequenz 2f0, 3f0, ... ausgewählt werden). In der Empfangsvorrichtung wird hierzu entweder ein festgelegter Bandpassfilter mit einer sinnvoll festgelegten Bandbreite verwendet (d.h. Sendevorrichtung und Empfangsvorrichtung sind vorab so aufeinander abgestimmt worden, dass die Empfangsvorrichtung den Bandbreitenbereich um die Frequenz f0 kennt) oder es wird ein durchstimmbarer Bandpassfilter eingesetzt, um den Sende- und Empfangsbereich verändern zu können.

Nachdem mit dem Bandpassfilter bzw. Frequenzfilter 6 eine Frequenzlinie ausgewählt worden ist, wird diese durch die dem Frequenzfilter nachgeschaltete Demodulationseinheit einer Demodulation entsprechend des zur Modulation des ausgesandten Impulszuges verwendeten Modulationsschemas verwendet. Je nach Modulationsschema (z.B. AM, FM, ...) können somit im Empfänger konventionelle, aus dem Stand der Technik bekannte Demodulationseinheiten 7 eingesetzt werden, um die Information zu demodulieren. Das in Figur 4a gezeigte, einfachste Empfängerkonzept der vorliegenden Erfindung weist eine Einschränkung dahingehend auf, dass alle Informationen, die eine Invertierung oder Phasenumkehr der Impulsform zur Folge haben, nicht demoduliert werden können (vergleiche die Beschreibung der Einschränkung bei der Amplitudenmodulation /QAM). Eine Demodulation von invertierten Impulsen ist mit einem Korrelationsempfänger möglich, der nachfolgend beschrieben wird.

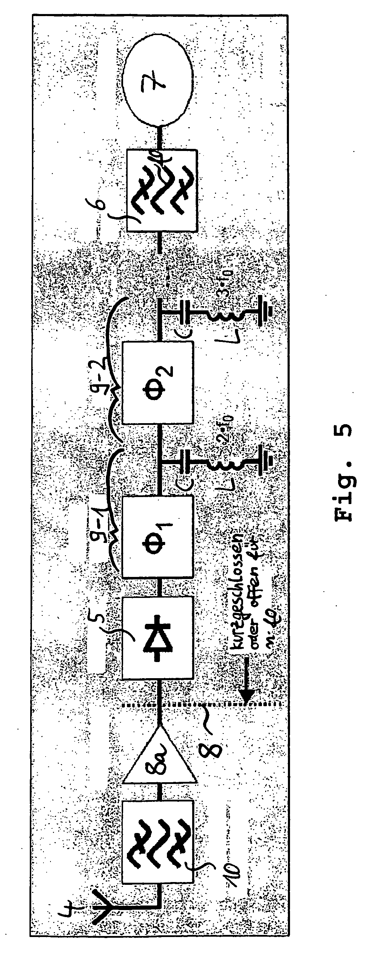

Das in Figur 4a vorgestellte Empfangskonzept der vorliegenden Erfindung hat insbesondere noch den Nachteil, dass (durch Ausschneiden einer einzelnen Frequenzlinie) zwar die Information voll vorhanden ist, das Ausschneiden jedoch mit einem entsprechenden Energieverlust einhergeht. Nachfolgend wird daher ein alternatives, weiter verbessertes Empfangskonzept gemäß der vorliegenden Erfindung zur Verbesserung der spektralen Effizienz beschrieben. Das grundsätzliche Empfangskonzept des in Figur 5 gezeigten, erweiterten Empfängers ist dasselbe wie das des in Figur 4a gezeigten Empfängers, so dass nachfolgend nur die Unterschiede bzw. die zusätzlichen Bauelemente beschrieben werden.

Die grundlegende Idee des in Figur 5 gezeigten Empfängers zur Verbesserung der spektralen Effizienz ist es, die höheren Harmonischen (also die Frequenzlinien bei den Frequenzen 2f0, 3f0, ...) zurückzureflektieren und sie damit erneut durch den (nicht-linearen) Gleichrichter 5 zu schicken. Da die Frequenzdifferenzen zwischen benachbarten Frequenzlinien jeweils gleich der Grundfrequenz bzw. der Wiederholrate der Einzelpulse f0 ist, wird hierdurch der Frequenzlinie bei der Frequenz f0 (also der Grundfrequenz) Energie zugeführt. Damit die Überlagerung der entsprechenden Frequenzen auch in Phase zueinander (konstruktive Interferenz) erfolgt, sind entsprechende Phasenjustierblöcke vorgesehen. Das in Figur 5 gezeigte Empfangskonzept nutzt somit zusätzlich auch die Energie der Harmonischen höherer Ordnung.

Die in Figur 5 gezeigte Empfangsvorrichtung weist zunächst eine Breitbandantenne 4 zum Empfang auf. Dieser ist ein Interferenzabweisungsfilter 10 nachgeschaltet (optionales Bauteil), der im vorliegenden Fall dazu verwendet wird, Signale, die außerhalb des vordefinierten UWB-Frequenzbandes bzw. der entsprechenden Frequenzmaske liegen, zu blockieren.

Dem Interferenz-Abweisungsfilter 10 ist ein Verstärker 8a nachgeschaltet. Dieser Verstärker (vorteilhafterweise ein rauscharmer Vorverstärker) wird zunächst dazu verwendet, das (auf der Übertragungsstrecke) abgeschwächte Impulszugsignal wieder auf einen geeigneten Signalpegel zu verstärken. Der Reflexionskoeffizient des Verstärkerausgangs ist nun so ausgebildet, dass er für die Frequenzen n*f0 (n=1, 2, 3, ...) ein Kurzschluss oder ein Leerlauf darstellt. Somit wird all die Energie, die durch die Grundfrequenz f0 und ihre höheren Harmonischen 2f0, 3f0, ... dem Verstärkerausgang aus Richtung der dem Verstärker nachgeschalteten Gleichrichtungseinheit 5 zugeführt wird, in das System zurückreflektiert (statt dass sie sich totläuft, wie es üblicherweise der Fall wäre). Der Verstärkerausgang bildet hier somit eine Rückreflexionsebene 8 für die vom späteren Frequenzfilter 6 durchzulassenden Frequenzlinien und höherer Harmonischer davon. Anders ausgedrückt: Die vom Verstärker 8a ausgebildete Rückreflexionsebene 8 hat einen Reflexionskoeffizienten von 1 oder -1 für die zu reflektierenden Frequenzlinien f0, 2f0, 3f0, ....

Dem Verstärker 8a bzw. der Rückreflexionsebene 8 ist dann die Gleichrichtungseinheit 5 nachgeschaltet. Grundsätzlich kann hierfür eine Gleichrichtungseinheit 5, wie sie auch bei der in Figur 4a gezeigten Empfangsvariante beschrieben wurde, eingesetzt werden. Vorteilhaft ist es jedoch, eine Gleichrichtungseinheit 5 einzusetzen, die so ausgebildet ist, dass sie in Rückwärtsrichtung bzw. Sperrrichtung Energien der Frequenzen 2f0, 3f0, ... (also der höheren Harmonischen von f0) durchlässt.

Der Gleichrichtungseinheit 5 ist nun eine Mehrzahl einzelner, in Serie geschalteter Phasenjustierblöcke 9-1, 9-2, ... nachgeschaltet. Diese Phasenjustierblöcke 9 sind so ausgebildet, dass sie die an der Rückreflexionsebene 8 rückreflektierten Signalanteile (also die in Richtung zum Frequenzfilter 6 laufenden und von diesem zur nachfolgenden Demodulationseinheit 7 durchgelassenen Signalanteile) einander konstruktiv überlagern.

Jeder einzelne dieser Phasenjustierblöcke 9 weist zum Beispiel einen geerdeten Reihenschwingkreis (LC-Reihenschwingkreis umfassend eine Kapazität C und eine Spule L, die mit der Erde verbunden ist) auf. Die eigentlichen Phasenjustierblöcke können dabei als Übertragungsleitung mit definierter Länge zur Erzielung der konstruktiven Interferenz ausgebildet sein. Diese LC-Reihenschwingkreise sind hinsichtlich ihrer Kapazitäten C und ihrer Induktivitäten L so ausgebildet, dass sie nacheinander jeweils einen Kurzschluss für eine Harmonische der Grundfrequenz f0 darstellen: Der der Gleichrichtungseinheit 5 unmittelbar nachgeschaltete erste Phasenjustierblock 9-1 bildet einen Kurzschluss für die zweite Harmonische 2f0, der diesem Phasenjustierblock nachfolgende Phasenjustierblock 9-2 einen Kurzschluss für die dritte Harmonische 3f0 usw. Zur ausreichenden Steigerung der Energieeffizienz ist es vorteilhaft, mindestens zwei, besser jedoch mehr als zwei Phasenjustierblöcke einzusetzen.

Die durch die einzelnen geerdeten LC-Reihenschwingkreise gebildeten Kurzschluss-Stromkreise reflektieren die Energie der jeweiligen Harmonischen durch die Gleichrichtungseinheit bzw. Diode 5 zurück, wo sie am offenen oder kurzgeschlossenen Ausgang des Verstärkers 8a reflektiert wird und ein zweites Mal durch die nicht-lineare Gleichrichtungseinheit 5 hindurchgeht und so die Möglichkeit erhält, in die Grundfrequenz f0 umgesetzt zu werden, um somit die Energie in der Grundfrequenz f0 entsprechend zu erhöhen. Der vorbeschriebene Aufbau der Phasenjustierblöcke dient dazu, die einzelnen reflektierten Harmonischen einer konstruktiven Interferenz zu unterwerfen. Die unterschiedlichen LC-Reihenschwingkreise und Phasenjustierstrecken werden dazu verwendet, die Steuerung jeder Harmonischen separat, also unabhängig von den anderen Harmonischen zu ermöglichen.

Dem letzten der serienverschalteten Phasenjustierblöcke 9 folgt dann der Bandpassfilter 6, der hier wiederum lediglich die Grundfrequenz f0 durchlässt. Diesem nachgeschaltet folgt dann schließlich der Demodulator 7, mit dem das entsprechende Modulationsschema des Impulszuges demoduliert wird.

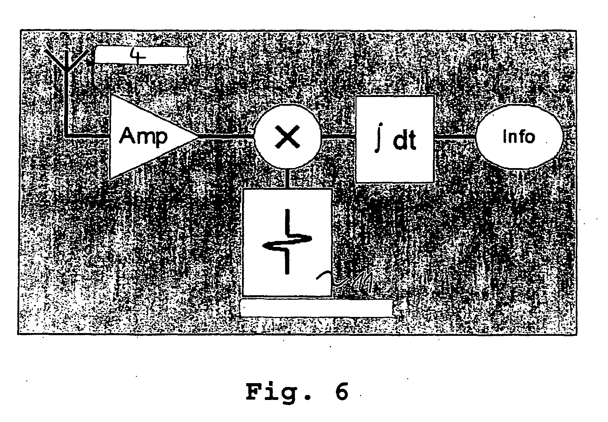

Figur 6 zeigt schließlich einen weiteren Empfänger, der im Rahmen der vorliegenden Erfindung einsetzbar ist. Bei diesem handelt es sich um einen Korrelationsempfänger. Am Ausgang dieses Empfängers kann die Information Info unmittelbar erhalten werden, ohne dass der Einsatz eines Demodulationsblocks notwendig ist. Dies hat jedoch auch Nachteile (siehe nachfolgend).

Bei diesem Empfänger folgt der Antenne 4 ein Verstärker AMP, ein Korrelator X, dem über einen Pulsgenerator 11 ein Template-Impuls zugeführt wird, und schließlich ein Integrator, an dessen Ausgang die Information Info unmittelbar erhalten wird.

Bei Verwendung dieses Korrelationsempfängers muss eine geeignete Synchronisation zwischen dem Template-Impuls und dem (über den Verstärker Amp zugeführten) empfangenen Impulszug sichergestellt werden. Dies ist zum einen nachteilig, da aufwendig (präzise Synchronisation) andererseits kann dies auch dazu genutzt werden, ein zusätzliches Zeitmultiplexen des Impulszuges durch zeitliche Verschachtelung von Impulszügen der selben Wiederholrate durchzuführen, um eine zusätzliche Dimension der Mehrbenutzerfähigkeit einzuführen.
Im Falle eines amplitudenmodulierten Signals resultiert die Demodulation dann in einer Ausgangsamplitude, die entsprechend der modulierten Einzelpulse des Impulszuges bzw. deren Amplitude variiert. Ebenso ist ein Empfang von invertierten Impulsen mit diesem Empfängertyp möglich.

Im Fall eines frequenzmodulierten Signals variiert die Ausgangsamplitude entsprechend der Autokorrelationsfunktion der Impulsform. Demgemäß muss die Frequenzabweichung (Mittelwertposition) in einem bestimmten Bereich verbleiben, da die Autokorrelationsfunktion nur eine endliche Ausdehnung hat.

Mit diesem Typ Empfänger sind ein Empfang und eine Demodulation von Modulationssignalen, die kombiniert eine Amplituden- und Frequenzmodulation verwenden, nicht möglich.

## Patentansprüche

1. Sendevorrichtung zur Erzeugung eines kontinuierlich, analog modulierten Impulszuges und zur Aussendung desselben, umfassend
einen Impulsgenerator (1), mit dem ein Impulszug mit einer Einzelpulsform so erzeugbar ist, dass der Impulszug im Frequenzbereich in ein vordefiniertes Frequenzband oder in eine vordefinierte Frequenzmaske fällt,
eine mit dem Impulsgenerator verbundene Modulationseinheit (2), der ein zu übertragendes analoges Informationssignal (I) zuführbar ist und mit der ein mit dem Impulsgenerator erzeugter oder zu erzeugender Impulszug mittels eines vordefinierten Modulationsschemas hinsichtlich seiner Amplitude und/oder der Position seiner Einzelpulse kontinuierlich, analog modulierbar ist, und
eine mit dem Impulsgenerator oder der Modulationseinheit verbundene, zur Aussendung im vordefinierten Frequenzband oder im Frequenzbereich der vordefinierten Frequenzmaske geeignete Aussendeeinheit (3), insbesondere eine Antenne, mit der der analog modulierte Impulszug aussendbar, insbesondere abstrahlbar ist.

2. Sendevorrichtung nach dem vorhergehenden Anspruch,
***dadurch gekennzeichnet, dass***
die Modulationseinheit (2) eine signalausgangsseitig mit der Signaleingangsseite des Impulsgenerators verbundene analoge frequenzmodulierende oder frequenzumtastende Einheit (2f), insbesondere einen analogen Frequenzmodulator oder einen FSK-Modulator, aufweist, mit der ein ihr zugeführtes Informationssignal (I) modulierbar und als ein frequenzmoduliertes Trägersignal dem Impulsgenerator als Eingangssignal zuführbar ist,
dass mit dem Impulsgenerator aus diesem Eingangssignal ein entsprechend der Frequenzmodulation des Eingangssignals frequenzmodulierter Impulszug generierbar ist, der im Frequenzbereich in das vordefinierte Frequenzband oder in die vordefinierte Frequenzmaske fällt, und
dass der frequenzmodulierte Impulszug als der analog modulierte Impulszug aussendbar ist.

3. Sendevorrichtung nach Anspruch 1,
***dadurch gekennzeichnet, dass***
die Modulationseinheit (2) eine signaleingangsseitig mit der Signalausgangsseite des Impulsgenerators verbundene amplitudermodulierende oder amplitudenumtastende Einheit (2a), insbesondere einen analogen Amplitudenmodulator oder einen ASK-Modulator, aufweist, der ein Informationssignal (I) zuführbar ist und mit der ein im Impulsgenerator erzeugter und an ihm als Ausgangssignal abgreifbarer, nicht-modulierter, im Frequenzbereich in das vordefinierte Frequenzband oder in die vordefinierte Frequenzmaske fallender Impulszug mit dem Informationssignal amplitudenmodulierbar ist, und
dass der amplitudenmodulierte Impulszug als der analog modulierte Impulszug aussendbar ist.

4. Sendevorrichtung nach dem vorhergehenden Anspruch,
**dadurch gekennzeichnet, dass**
die amplitudenmodulierende oder amplitudenumtastende Einheit (2a) ein abstimmbares Dämpfungselement (2a-1) oder ein multiplizierendes Element aufweist, mit dem die Amplitude der Einzelpulse des Ausgangssignals entsprechend der momentanen Amplitude des Informationssignals einstellbar ist.
und/oder
dass die Modulationseinheit (2) eine signalausgangsseitig mit der Signaleingangsseite des Impulsgenerators verbundene, ein periodisches, bevorzugt sinusförmiges, nicht-moduliertes Trägersignal erzeugende Einheit (2a-2) aufweist.

5. Sendevorrichtung nach Anspruch 1,
**dadurch gekennzeichnet, dass**
die Modulationseinheit (2)
eine frequenzmodulierende oder frequenzumtastende und synchron dazu amplitudenmodulierende oder amplitudenumtastende, nachfolgend als FM/AM-Einheit bezeichnete Einheit (2fa-1), insbesondere einen binären PSK-Modulator, einen Vierphasenmodulator oder einen Quadraturamplitudenmodulator, mit der ein ihr zugeführtes Informationssignal (I) frequenz- und synchron dazu amplitudenmodulierbar ist,
einen signaleingangsseitig mit der Signalausgangsseite der FM/AM-Einheit (2fa-1) und mit seinem Frequenzausgang (2fa-2f) mit der Signaleingangsseite des Impulsgenerators verbundenen Amplituden-Frequenz-Separator (2fa-2), mit dem das frequenz- und synchron dazu amplitudenmodulierte Signal der FM/AM-Einheit in einen frequenzmodulierten Anteil (S-f) und einen amplitudenmodulierten Anteil (S-a) zerlegbar ist, und
eine signaleingangsseitig mit dem Amplitudenausgang (2fa-2a) des Amplituden-Frequenz-Separators (2fa-2) und mit der Signalausgangsseite des Impulsgenerators verbundene amplitudenmodulierende oder amplitudenumtastende Einheit (2fa-3), insbesondere einen analogen Amplitudenmodulator oder einen ASK-Modulator, mit der ein im Impulsgenerator erzeugter und an ihm als Ausgangssignal abgreifbarer, entsprechend des frequenzmodulierten Anteils (S-f) frequenzmodulierter, im Frequenzbereich in das vordefinierte Frequenzband oder in die vordefinierte Frequenzmaske fallender Impulszug mit dem amplitudenmodulierten Anteil (S-a) amplitudenmodulierbar ist,
aufweist, und
dass der frequenz- und amplitudenmodulierte Impulszug als der analog modulierte Impulszug aussendbar ist.

6. Sendevorrichtung nach dem vorhergehenden Anspruch,
***dadurch gekennzeichnet, dass***
die amplitudenmodulierende oder amplitudenumtastende Einheit (2fa-3) einen steuerbaren Amplitudensteller (2a-1), bevorzugt ein steuerbares Dämpfelement, ein steuerbares Verstärkungselement oder ein multiplizierendes Element aufweist, mit dem die Amplitude der Einzelpulse des frequenzmodulierten Impulszuges entsprechend der momentanen Amplitude des amplitudenmodulierten Anteils (S-a) einstellbar ist.

7. Empfangsvorrichtung zum Empfang eines von einer Sendevorrichtung ausgesandten, kontinuierlich, analog modulierten Impulszuges, der im Frequenzbereich in ein vordefiniertes Frequenzband oder in eine vordefinierte Frequenzmaske fällt, umfassend
eine zum Empfang des kontinuierlich, analog modulierten Impulszugs geeignete Empfangseinheit (4), insbesondere eine Antenne,
eine der Empfangseinheit nachgeschaltete Gleichrichtungseinheit (5), bevorzugt ausgestaltet als Diodenhalbweg- oder Diodenvollweggleichrichter oder als Quadrierer, zur Gleichrichtung des Impulszugs nach dessen Empfang,
einem der Gleichrichtungseinheit nachgeschalteten Bandpassfilter (6) zum Durchlass definierter Spektralbereiche des Frequenzspektrums des Impulszugs nach dessen Gleichrichtung, und
eine dem Frequenzfilter nachgeschaltete Demodulationseinheit (7), mit dem der Impulszug nach seiner Filterung im Frequenzfilter mit einem Demodulationsschema gemäß seines Modulationsschemas demodulierbar ist.

8. Empfangsvorrichtung nach dem vorhergehenden Anspruch
***dadurch gekennzeichnet, dass***
der Bandpassfilter (6) zum Durchlass genau einer modulierten Frequenzlinie, bevorzugt zum Durchlass ausschließlich der der Grundfrequenz (f0) oder der Wiederholrate der Einzelpulse des Impulszuges entsprechenden modulierten Frequenzline ausgebildet ist.

9. Empfangsvorrichtung nach einem der vorhergehenden Ansprüche 7 bis 8
***gekennzeichnet durch***
eine zur Rückreflexion vom Frequenzfilter durchzulassender oder durchgelassener Frequenzlinien und/oder höherer Harmonischer davon ausgebildete Rückreflexionsebene (8)
und
bevorzugt auch **durch** mindestens einen, bevorzugt mehrere, der Rückreflexionsebene nachgeschaltete(n) Phasenjustierblock/Phasenjustierblöcke (9) mit dem/denen an der Rückreflexionsebene rückreflektierte Signalanteile den vom Frequenzfilter durchgelassenen oder durchzulassenden Signalanteilen konstruktiv überlagerbar sind.

10. Empfangsvorrichtung nach dem vorhergehenden Anspruch,
***dadurch gekennzeichnet, dass***
die Rückreflexionsebene (8) als eine zwischen die Empfangseinheit und die Gleichrichtungseinheit geschaltete Reflexionsebene (8) zur Reflexion von aus Richtung der Gleichrichtungseinheit einlaufenden, vom Frequenzfilter durchzulassenden oder durchgelassenen Frequenzlinien und/oder höherer Harmonischer davon ausgebildet ist, wobei diese Reflexionsebene (8) Teil eines Verstärkers (8a) sein kann, dessen Ausgangs-Reflexionskoeffizient zur Reflexion dieser Frequenzlinien und/oder höherer Harmonischer davon ausgebildet ist,
und/oder
dass der Phasenjustierblock oder mindestens einer, bevorzugt alle der Phasenjustierblöcke der Gleichrichtungseinheit nachgeschaltet und bevorzugt auch vor dem Frequenzfilter angeordnet ist/sind, dass der Phasenjustierblock oder mindestens einer, bevorzugt alle der Phasenjustierblöcke einen geerdeten Reihenschwingkreis aufweist/aufweisen und/oder dass der Phasenjustierblock oder mindestens einer, bevorzugt alle der Phasenjustierblöcke als Übertragungsleitung mit definierter Länge ausgebildet ist/sind.

11. Empfangsvorrichtung nach einem der vorhergehenden Ansprüche 7 bis 10
***gekennzeichnet durch***
einen zwischen die Empfangseinheit und die Gleichrichtungseinheit geschalteten Interferenz-Abweisungsfilter (10), der zum Blockieren übertragener Signale außerhalb des vordefinierten Frequenzbands oder der vordefinierten Frequenzmaske ausgebildet ist
und/oder
**dadurch**, dass die Gleichrichtungseinheit so ausgebildet ist, dass sie in Rückwärtsrichtung vom Frequenzfilter durchzulassende oder durchgelassene Frequenzlinien und/oder höhere Harmonische davon durchlässt.

12. Sende- und Empfangsvorrichtung zur Erzeugung eines kontinuierlich, analog modulierten Impulszuges, zur Aussendung desselben und zum Empfang desselben
***gekennzeichnet durch***
eine Sendevorrichtung nach einem der Ansprüche 1 bis 6 und eine zum Empfang der von dieser Sendevorrichtung aussendbaren oder ausgesendeten Signale geeignete Empfangsvorrichtung nach einem der Ansprüche 7 bis 11.

13. Sendeverfahren und Empfangsverfahren,
wobei auf der Senderseite ein zu übertragendes analoges Informationssignal (I) zugeführt wird sowie
- ein Impulszug mit einer Einzelpulsform im Zeitbereich so erzeugt wird, dass der Impulszug im Frequenzbereich in ein vordefiniertes Frequenzband oder in eine vordefinierte Frequenzmaske fällt,
- der erzeugte Impulszug mittels eines vordefinierten, analogen Modulationsschemas hinsichtlich seiner Amplitude und/oder der Position seiner Einzelpulse kontinuierlich, analog moduliert wird, und
- mittels einer zur Aussendung im vordefinierten Frequenzband geeigneten Aussendeeinheit der analog modulierte Impulszug ausgesendet wird
und
wobei auf der Empfängerseite
- der kontinuierlich, analog modulierte Impulszug mittels einer zum Empfang des Impulszugs geeigneten Empfangseinheit empfangen,
- gleichgerichtet,
- mittels eines zum Durchlass eines definierten Spektralbereichs, bevorzugt zum Durchlass genau einer modulierten Frequenzlinie, bevorzugt zum Durchlass ausschließlich der der Grundfrequenz (f0) oder der Wiederholrate der Einzelpulse des Impulszuges entsprechenden Frequenzlinie, des Frequenzspektrums des Impulszugs ausgebildeten Bandpassfilter (6) gefiltert, und
- mit einem Demodulationsschema gemäß seines Modulationsschemas demoduliert wird,
wobei bevorzugt eine Sende- und Empfangsvorrichtung nach Anspruch 12 zum Aussenden und zum Empfang von Signalen eingesetzt wird.

14. Einheit nach einem der vorhergehenden Ansprüche 1 bis 12,
***dadurch gekennzeichnet, dass***
das Modulationsschema und/oder das Demodulationsschema ein Amplituden (de) modulationsschema (AM-Schema), ein Amplitudenumtastungsschema (ASK-Schema), ein Frequenz (de) modulationsschema (FM-Schema), ein Frequenzumtastungsschema (FSK-Schema), ein Phasen (de) modulationsschema (PSK-Schema), insbesondere ein binäres PSK-Schema (BPSK-Schema) oder ein Vierphasen-(De)Modulationsschema (QPSK-Schema), oder ein Quadraturamplituden (de) modulationsschema (QAM-Schema) ist
und/oder
dass das vordefinierte Frequenzband ein UWB-Frequenzband oder ein Frequenzband im Bereich von 3.1 GHz bis 10.6 GHz ist oder dass die vordefinierte Frequenzmaske eine vordefinierte UWB-Frequenzmaske, insbesondere eine Frequenzmaske definiert durch maximal erlaubte mittlere Sendeleistungen im Bereich von 3.1 bis 10.6 GHz oder im Bereich von 6 bis 8.5 GHz, ist,
und/oder
dass das Informationssignal ein Sprachsignal, ein Musiksignal oder ein Messdatensignal ist.

15. Verfahren nach Anspruch 13
***dadurch gekennzeichnet, dass***
das Modulationsschema und/oder das Demodulationsschema ein Amplituden (de) modulationsschema (AM-Schema), ein Amplitudenumtastungsschema (ASK-Schema), ein Frequenz (de) modulationsschema (FM-Schema), ein Frequenzumtastungsschema (FSK-Schema), ein Phasen (de) modulationsschema (PSK-Schema), insbesondere ein binäres PSK-Schema (BPSK-Schema) oder ein Vierphasen-(De)Modulationsschema (QPSK-Schema), oder ein Quadraturamplituden (de) modulationsschema (QAM-Schema) ist
und/oder
dass das vordefinierte Frequenzband ein UWB-Frequenzband oder ein Frequenzband im Bereich von 3.1 GHz bis 10.6 GHz ist oder dass die vordefinierte Frequenzmaske eine vordefinierte UWB-Frequenzmaske, insbesondere eine Frequenzmaske definiert durch maximal erlaubte mittlere Sendeleistungen im Bereich von 3.1 bis 10.6 GHz oder im Bereich von 6 bis 8.5 GHz, ist,
und/oder
dass das Informationssignal ein Sprachsignal, ein Musiksignal oder ein Messdatensignal ist.

## Claims

1. Transmitting device for producing a continuous, analogue modulated pulse train and for emitting the same, comprising
a pulse generator (1), with which a pulse train with an individual pulse form can be produced such that the pulse train falls in the frequency range into a predefined frequency band or into a predefined frequency mask,
a modulation unit (2) which is connected to the pulse generator, to which modulation unit (2) an analogue information signal (I) to be transmitted can be supplied, and with which modulation unit (2) a pulse train produced or to be produced by the pulse generator can be continuously, analogue-modulated by means of a predefined modulation scheme with respect to the amplitude thereof and/or the position of the individual pulses thereof, and
an emitting unit (3), in particular an antenna, which is connected to the pulse generator or to the modulation unit and is suitable for emitting in the predefined frequency band or in the frequency range of the predefined frequency mask, with which emitting unit the analogue modulated pulse train can be emitted, in particular beamed.

2. Transmitting device according to the preceding claim,
**characterised in that**
the modulation unit (2) has an analogue frequency-modulating or frequency shift keying unit (2f), which is connected on the signal output side to the signal input side of the pulse generator, in particular an analogue frequency modulator or an FSK modulator, with which an information signal (I) supplied thereto can be modulated and, as a frequency-modulated carrier signal, can be supplied to the pulse generator as input signal,
**in that**, from this input signal, a pulse train which is frequency-modulated corresponding to the frequency modulation of the input signal can be generated by the pulse generator, which pulse train falls in the frequency range into the predefined frequency band or into the predefined frequency mask, and
**in that** the frequency-modulated pulse train can be emitted as an analogue modulated pulse train.

3. Transmitting device according to claim 1,
***characterised in that***
the modulation unit (2) has an amplitude-modulating or amplitude shift keying unit (2a), which is connected on the signal input side to the signal output side of the pulse generator, in particular an analogue amplitude modulator or an ASK modulator, to which an information signal (I) can be supplied and with which unit (2a) a pulse train, which is produced in the pulse generator and can be tapped thereon as output signal, is non-modulated, falls in the frequency range into the predefined frequency band or into the predefined frequency mask, can be amplitude-modulated with the information signal, and
**in that** the amplitude-modulated pulse train can be emitted as the analogue modulated pulse train.

4. Transmitting device according to the preceding claim,
**characterised in that**
the amplitude-modulating or amplitude shift keying unit (2a) has a tuneable attenuator (2a-1) or a multiplying element with which the amplitude of the individual pulses of the output signal can be adjusted corresponding to the momentary amplitude of the information signal,
and/or
**in that** the modulation unit (2) has a unit (2a-2) which is connected on the signal output side to the signal input side of the pulse generator and produces a periodic, preferably sinusoidal, non-modulated carrier signal.

5. Transmitting device according to claim 1,
**characterised in that**
the modulation unit (2)
has a unit (2fa-1) which is frequency-modulating or frequency shift keying and, synchronously thereto, amplitude-modulating or amplitude shift keying, termed subsequently FM/AM unit, in particular a binary PSK modulator, a four-phase modulator or a quadrature amplitude modulator, with which an information signal (I) supplied thereto can be frequency- and, synchronously thereto, amplitude-modulated,
an amplitude-frequency separator (2fa-2) which is connected on the signal input side to the signal output side of the FM/AM unit (2fa-1) and with the frequency output (2fa-2f) thereof to the signal input side of the pulse generator, with which amplitude-frequency separator the frequency- and, synchronously thereto, amplitude-modulated signal of the FM/AM unit can be split into a frequency-modulated component (S-f) and an amplitude-modulated component (S-a), and
an amplitude-modulating or amplitude shift keying unit (2fa-3) witch is connected on the signal input side to the amplitude output (2fa-2a) of the amplitude-frequency separator (2fa-2) and to the signal output side of the pulse generator, in particular an analogue amplitude modulator or an ASK modulator, with which unit (2fa-3) a pulse train which is produced in the pulse generator and can be tapped thereon as output signal, is frequency-modulated corresponding to the frequency-modulated component (S-f), falls in the frequency range into the predefined frequency band or into the predefined frequency mask, can be amplitude-modulated with the amplitude-modulated component (S-a), and
**in that** the frequency- and amplitude-modulated pulse train can be emitted as the analogue modulated pulse train.

6. Transmitting device according to the preceding claim,
***characterised in that***
the amplitude-modulating or amplitude shift keying unit (2fa-3) has a controllable amplitude regulator (2a-1), preferably a controllable attenuator, a controllable amplifying element or a multiplying element, with which the amplitude of the individual pulses of the frequency-modulated pulse train can be adjusted corresponding to the momentary amplitude of the amplitude-modulated component (S-a).

7. Receiving device for receiving a continuous, analogue modulated pulse train which is emitted by a transmitting device and falls in the frequency range into a predefined frequency band or into a predefined frequency mask, comprising
a receiving unit (4), in particular an antenna, which is suitable for receiving the continuous, analogue modulated pulse train,
a rectifying unit (5) which is connected downstream of the receiving unit, preferably configured as a diode half-wave- or diode full-wave rectifier or as a squarer, for rectifying the pulse train after receipt thereof,
a band pass filter (6) which is connected downstream of the rectifying unit for letting through defined spectral ranges of the frequency spectrum of the pulse train after rectification thereof, and
a demodulation unit (7) which is connected downstream of the frequency filter and with which the pulse train, after filtering thereof in the frequency filter, can be demodulated with a demodulation scheme according to the modulation scheme thereof.

8. Receiving device according to the preceding claim,
**characterised in that**
the band pass filter (6) is configured for letting through precisely one modulated frequency line, preferably for letting through exclusively the modulated frequency line which corresponds to the basic frequency (fO) or to the repetition rate of the individual pulses of the pulse train.

9. Receiving device according to one of the preceding claims 7 or 8,
***characterized by***
a back reflection plane (8) which is configured for back reflection of frequency lines and/or higher harmonics thereof which are to be let through or have been let through by the frequency filter
and
preferably also by at least one, preferably a plurality, of phase adjusting block/phase adjusting blocks (9) which is/are connected downstream of the back reflection plane and with which signal components which are back reflected on the back reflection plane can be superimposed constructively on the signal components which have been let through or are to be let through by the frequency filter.

10. Receiving device according to the preceding claim,
***characterised in that***
the back reflection plane (8) is configured as a reflection plane (8) which is connected between the receiving unit and rectifying unit for reflection of frequency lines and/or higher harmonics thereof which run in from the direction of the rectifying unit and are to be let through or have been let through by the frequency filter, this reflection plane (8) being able to be part of an amplifier (8a), the output reflection coefficient of which is configured for reflection of these frequency lines and/or higher harmonics thereof,
and/or
**in that** the phase adjusting block or at least one, preferably all, of the phase adjusting blocks are connected downstream of the rectifying unit and preferably is/are disposed also in front of the frequency filter, **in that** the phase adjusting block or at least one, preferably all, of the phase adjusting blocks has/have an earthed series oscillating circuit and/or **in that** the phase adjusting block or at least one, preferably all, of the phase adjusting blocks is/are configured as a transmission line with a defined length.

11. Receiving device according to one of the preceding claims 7 to 10,
***characterised by***
an interference rejecting filter (10) which is connected between the receiving unit and the rectifying unit and which is configured for blocking transmitted signals outside the predefined frequency band or the predefined frequency mask.
and/or
in that the rectifying unit is configured such that it lets through frequency lines and/or higher harmonics thereof which are to be let through or have been let through by the frequency filter in the backward direction.

12. Transmitting and receiving device for producing a continuous, analogue modulated pulse train, for emitting the same and for receiving the same,
**characterised by**
a transmitting device according to one of the claims 1 to 6 and a receiving device which is suitable for receiving the signals which can be emitted or have been emitted by this transmitting device, according to one of the claims 7 to 11.

13. Transmitting method and receiving method,
wherein, on the transmitter side, an analogue information signal (I) is supplied which is to be transmitted, and
- a pulse train with an individual pulse form is produced in the time range such that the pulse train falls in the frequency range into a predefined frequency band or into a predefined frequency mask,
- the produced pulse train is continuously, analogue modulated by means of a predefined, analogue modulation scheme with respect to the amplitude thereof and/or the position of the individual pulses thereof, and
- the analogue modulated pulse train is emitted by means of an emitting unit which is suitable for emitting in the predefined frequency band,
and
wherein, on the receiver side,
- the continuously, analogue modulated pulse train is received by means of a receiving unit which is suitable for receiving the pulse train,
- is rectified,
- is filtered by means of a band pass filter (6) which is configured for letting through a defined spectral range, preferably for letting through precisely one modulated frequency line, preferably for letting through exclusively the frequency line which corresponds to the basic frequency (fO) or to the repetition rate of the individual pulses of the pulse train, of the frequency spectrum of the pulse train, and
- is demodulated with a demodulation scheme according to the modulation scheme thereof,
wherein preferably a transmitting- and receiving device according to claim 12 is used for emitting and for receiving signals.

14. Unit according to one of the preceding claims 1 to 12.
**characterised in that**
the Modulation scheme and/or the demodulation scheme is an amplitude (de)modulation scheme (AM scheme), an amplitude shift keying scheme (ASK scheme), a frequency (de)modulation scheme (FM scheme), a frequency shift keying scheme (FSK scheme), a phase (de)modulation scheme (PSK scheme), in particular a binary PSK scheme (BPSK scheme) or a four-phase (de)modulation scheme (QPSK scheme) or a quadrature amplitude (de)modulation scheme (QAM scheme)
and/or
**in that** the predefined frequency band is a UWB frequency band or a frequency band in the range of 3.1 GHz to 10.6 GHz, or **in that** the predefined frequency mask is a predefined UWB frequency mask, in particular a frequency mask defined by maximum permitted average transmitting powers in the range of 3.1 to 10.6 GHz or in the range of 6 to 8.5 GHz,
and/or
**in that** the information signal is a voice signal, a music signal or a measuring data signal.

15. Method according to claim 13,
***characterized in that***
the modulation scheme and/or the demodulation scheme is an amplitude (de)modulation scheme (AM scheme), an amplitude shift keying scheme (ASK scheme), a frequency (de)modulation scheme (FM scheme), a frequency shift keying scheme (ASK scheme), a phase (de)modulation scheme (PSK scheme), in particular a binary PSK scheme (BPSK scheme) or a four-phase (de)modulation scheme (QPSK scheme) or a quadrature amplitude (de)modulation scheme (QAM scheme)
and/or
**in that** the predefined frequency band is a UWB frequency band or a frequency band in the range of 3.1 GHz to 10.6 GHz or **in that** the predefined frequency mask is a predefined UWB frequency mask, in particular a frequency mask defined by maximum permitted average transmitting powers in the range of 3.1 to 10.6 GHz or in the range of 6 to 8.5 GHz,
and/or
**in that** the information signal is a voice signal, a music signal or a measuring data signal.

## Revendications

1. Dispositif d'émission destiné à générer un train d'impulsions à modulation analogique continue et destiné à émettre celui-ci, comportant
- un générateur d'impulsions (1), par lequel un train d'impulsions avec une forme d'impulsion individuelle peut être généré de telle sorte que le train d'impulsions tombe dans la gamme des fréquences dans une bande de fréquences prédéfinie ou dans un masque de fréquences prédéfini,
- une unité de modulation (2), qui est reliée au générateur d'impulsions vers laquelle peut être acheminé un signal d'informations (I) analogique à transmettre et par laquelle un train d'impulsions, généré ou à générer avec le générateur d'impulsions, peut être soumis en continu à une modulation analogique, au niveau de son amplitude et/ou de la position de ses impulsions individuelles, au moyen d'un schéma de modulation prédéfini,
- une unité émettrice (3), en particulier une antenne, laquelle est reliée au générateur d'impulsions ou à l'unité de modulation et est apte à émettre dans la bande de fréquences prédéfinie ou dans la gamme des fréquences du masque de fréquences prédéfini et par laquelle le train d'impulsions à modulation analogique peut être émis, en particulier peut être diffusé.

2. Dispositif d'émission selon la revendication précédente, **caractérisé**
- **en ce que** l'unité de modulation (2) présente une unité (2f) analogique à modulation de fréquence ou par déplacement de fréquence, reliée du côté de sortie des signaux au côté d'entrée des signaux du générateur d'impulsions, en particulier un modulateur de fréquence analogique ou un modulateur FSK, laquelle unité permet de moduler le signal d'informations (I) qui lui est acheminé et permet de l'acheminer sous la forme d'un signal porteur modulé en fréquence vers le générateur d'impulsions en tant que signal d'entrée,
- **en ce qu'**au moyen du générateur d'impulsions peut être généré à partir de ce signal d'entrée un train d'impulsions, qui est modulé en fréquence conformément à la modulation de fréquence du signal d'entrée et qui tombe dans la gamme des fréquences dans la bande de fréquences prédéfinie ou dans le masque de fréquences prédéfini, et
- **en ce que** le train d'impulsions modulé en fréquence peut être émis en tant que train d'impulsions à modulation analogique.

3. Dispositif d'émission selon la revendication 1, **caractérisé**
- **en ce que** l'unité de modulation (2) présente une unité (2a) à modulation d'amplitude ou par déplacement d'amplitude, reliée du côté d'entrée des signaux au côté de sortie des signaux du générateur d'impulsions, en particulier un modulateur d'amplitude analogique ou un modulateur ASK, vers laquelle un signal d'informations (I) peut être acheminé et par laquelle un train d'impulsions non modulé, qui est généré dans le générateur d'impulsions et peut être prélevé sur ce dernier en tant que signal de sortie tombe dans la gamme des fréquences dans la bande de fréquences prédéfinie ou dans le masque de fréquences prédéfini, peut être modulé en amplitude avec le signal d'informations, et
- **en ce que** le train d'impulsions modulé en amplitude peut être émis en tant que train d'impulsions à modulation analogique.

4. Dispositif d'émission selon la revendication précédente, **caractérisé**
- **en ce que** l'unité (2a) à modulation d'amplitude ou par déplacement d'amplitude présente un élément d'amortissement (2a-1) accordable ou un élément multiplicateur, par lequel l'amplitude des impulsions individuelles du signal de sortie peut être réglée conformément à l'amplitude momentanée du signal d'informations,
et/ou
- **en ce que** l'unité de modulation (2) présente une unité (2a-2), qui est reliée du côté de sortie des signaux au côté d'entrée des signaux du générateur d'impulsions et qui génère un signal porteur périodique, de préférence sinusoïdal, non modulé.

5. Dispositif d'émission selon la revendication 1, **caractérisé**
**en ce que** l'unité de modulation (2) comporte
- une unité (2fa-1), dénommée ci-après unité FM/AM, à modulation de fréquence ou par déplacement de fréquence et, en synchronisation avec cela, à modulation d'amplitude ou par déplacement d'amplitude, en particulier un modulateur PSK binaire, un modulateur à quatre phases ou un modulateur d'amplitude en quadrature, par laquelle unité un signal d'informations (I), acheminé vers celle-ci, peut être modulé en amplitude, fréquence et, en synchronisation avec cela,
- un séparateur amplitude/fréquence (2fa-2), qui est relié au côté d'entrée des signaux avec le côté de sortie des signaux de l'unité FM/AM (2fa-1) et par sa sortie de fréquence (2fa-2f) avec le côté d'entrée des signaux du générateur d'impulsions et par lequel le signal modulé en amplitude, en fréquence et, en synchronisation avec cela de l'unité FM/AM peut être décomposé en une fraction (S-f) modulée en fréquence et en une fraction (S-a) modulée en amplitude, et
- une unité (2fa-3) à modulation d'amplitude ou par déplacement d'amplitude, en particulier un modulateur d'amplitude analogique ou un modulateur ASK, laquelle est reliée du côté d'entrée des signaux avec la sortie d'amplitude (2fa-2) du séparateur amplitude/fréquence (2fa-2) et avec le côté de sortie des signaux du générateur d'impulsions et par laquelle un train d'impulsions, qui est généré dans le générateur d'impulsions et peut être prélevé sur ce dernier en tant que signal de sortie, qui est modulé en fréquence conformément à la fraction (S-f) modulée en fréquence et qui tombe dans la gamme des fréquences dans la bande de fréquences prédéfinie ou dans le masque de fréquences prédéfini, peut être modulé en amplitude avec la fraction (S-a) modulée en amplitude,
et
**en ce que** le train d'impulsions modulé en fréquence et modulé en amplitude peut être émis en tant que train d'impulsions à modulation analogique.

6. Dispositif d'émission selon la revendication précédente, **caractérisé en ce que** l'unité (2fa-3) à modulation d'amplitude ou par déplacement d'amplitude présente un dispositif de réglage d'amplitude (2a-1) commandable, de préférence un élément d'amortissement commandable, un élément d'amplification commandable ou un élément multiplicateur, par lequel l'amplitude des impulsions individuelles du train d'impulsions modulé en fréquence peut être réglée conformément à l'amplitude momentanée de la fraction (S-a) modulée en amplitude.

7. Dispositif de réception destiné à recevoir un train d'impulsions à modulation analogique continue, qui est émis par un dispositif d'émission et qui tombe dans la gamme des fréquences dans une bande de fréquences prédéfinie ou dans un masque de fréquences prédéfini, comportant
- une unité réceptrice (4), en particulier une antenne, apte à recevoir le train d'impulsions à modulation analogique continue,
- une unité de redressement (5), montée en aval de l'unité réceptrice et configurée, de préférence, sous forme de redresseur à diodes en demi-longueur d'onde ou en pleine longueur d'onde ou sous forme de conformateur d'impulsions carrées, en vue du redressement du train d'impulsions après la réception de celui-ci,
- un filtre passe-bande (6), monté en aval de l'unité de redressement et destiné à laisser passer des zones définies du spectre des fréquences du train d'impulsions après le redressement de celui-ci, et
- une unité de démodulation (7), montée en aval du filtre de fréquences, par laquelle le train d'impttlsions, après son filtrage dans le filtre de fréquences, peut être démodulé selon son schéma de modulation avec un schéma de démodulation.

8. Dispositif de réception selon la revendication précédente, **caractérisé en ce que** le filtre passe-bande (6) est façonné pour laisser passer exactement une ligne de fréquence modulée, de préférence pour laisser passer exclusivement la ligne de fréquence modulée correspondant à la fréquence de base (f0) ou au taux de répétition des impulsions individuelles du train d'impulsions.

9. Dispositif de réception selon l'une quelconque des revendications précédentes 7 à 8, **caractérisé**
- **par** un niveau de réflexion en retour (8) façonné pour la réflexion en retour des lignes de fréquence à laisser passer ou passées par le filtre de fréquences et/ou des harmoniques plus élevées de celles-ci,
et
de préférence aussi, par au moins un, de préférence plusieurs bloc(s) d'ajustement de phase (9), monté(s) en aval du niveau de réflexion en retour, par lequel/lesquels des fractions de signaux réfléchies en retour sur le niveau de réflexion en retour sont superposées constructivement aux fractions de signaux passées ou à laisser passer par le filtre de fréquences.

10. Dispositif de réception selon la revendication précédente, **caractérisé**
- **en ce que** le niveau de réflexion en retour (8) est façonné sous la forme d'un niveau de réflexion (8), monté entre l'unité réceptrice et l'unité de redressement et destiné à la réflexion des lignes de fréquences entrant à partir de l'unité de redressement, à laisser passer ou passées par le filtre de fréquences et/ou des harmoniques plus élevées de celles-ci, ce niveau de réflexion (8) pouvant être une partie d'un amplificateur (8a) dont le coefficient de réflexion de sortie est façonné pour la réflexion de ces lignes de fréquences et/ou des harmoniques plus élevées de celles-ci,
et/ou
- **en ce que** le bloc d'ajustement de phase ou au moins un, de préférence tous les blocs d'ajustement de phase est(sont) monté(s) en aval de l'unité de redressement et, de préférence aussi, est(sont) disposé(s) devant le filtre de fréquences, en ce que le bloc d'ajustement de phase ou au moins un, de préférence tous les blocs d'ajustement de phase présente(-ent) un circuit résonant série relié à la terre, et/ou en ce que le bloc d'ajustement de phase ou au moins un, de préférence tous les blocs d'ajustement de phase est(sont) façonné(s) sous la forme d'une ligne de transmission avec une longueur définie.

11. Dispositif de réception selon l'une quelconque des revendications précédentes 7 à 10, **caractérisé**
- **par** un filtre de rejet d'interférence (10), qui est monté entre l'unité réceptrice et l'unité de redressement et qui est façonné pour bloquer des signaux transmis, en dehors de la bande de fréquences prédéfinie ou du masque de fréquences prédéfini,
et/ou
- en ce que l'unité de redressement est façonnée de telle sorte qu'elle laisse passer dans le sens de retour les lignes de fréquences à laisser passer ou passées par le filtre de fréquences et/ou des harmoniques plus élevées de celles-ci.

12. Dispositif d'émission et de réception destiné à générer un train d'impulsions à modulation analogique continue et destiné à émettre ce dernier et à recevoir ce dernier,
**caractérisé par**
un dispositif d'émission selon l'une quelconque des revendications 1 à 6 et un dispositif de réception selon l'une quelconque des revendications 7 à 11, apte à recevoir les signaux à émettre ou émis par ledit dispositif d'émission.

13. Procédé d'émission et procédé de réception
du côté émetteur, un signal d'informations (I) analogique à transmettre étant acheminé, et
- un train d'impulsions avec une forme d'impulsion individuelle est généré dans la plage temporelle, de telle sorte que le train d'impulsions tombe dans la gamme des fréquences dans une bande de fréquences prédéfinie ou dans un masque de fréquences prédéfini,
- le train d'impulsions généré est soumis à une modulation analogique continue, au niveau de son amplitude et/ou de la position de ses impulsions individuelles, au moyen d'un schéma de modulation analogique prédéfini, et
- le train d'impulsions à modulation analogique est émis au moyen d'une unité émettrice apte à émettre dans la bande de fréquences prédéfinie,
et
du côté récepteur,
- le train d'impulsions soumis à une modulation analogique continue étant reçu au moyen d'une unité réceptrice apte à recevoir le train d'impulsions,
- étant redressé,
- étant filtré au moyen d'un filtre passe-bande (6) façonné pour laisser passer une zone spectrale définie, de préférence pour laisser passer exactement une ligne de fréquence modulée, de préférence pour laisser passer exclusivement la ligne de fréquence correspondant à la fréquence de base (f0) ou au taux de répétition des impulsions individuelles du train d'impulsions, du spectre de fréquences du train d'impulsions, et
- étant démodulé selon un schéma de modulation avec un schéma de démodulation,
de préférence, un dispositif d'émission et de réception selon la revendication 12, destiné à émettre et à recevoir des signaux étant utilisé.

14. Unité selon l'une quelconque des revendications précédentes 1 à 12, **caractérisée**
- **en ce que** le schéma de modulation et/ou le schéma de démodulation est un schéma de (dé)modulation d'amplitudes (schéma AM), un schéma de par déplacement d'amplitude (schéma ASK), un schéma de (dé)modulation de fréquence (schéma FM), un schéma par déplacement de fréquence (schéma FSK), un schéma de (dé)modulation par changement de phase (schéma PSK), en particulier un schéma PSK binaire (schéma BPSK) ou un schéma de (dé)modulation à quatre phases (schéma QPSK) ou un schéma de (dé)modulation d'amplitude en quadrature (schéma QAM),
et/au
- **en ce que** la bande de fréquences prédéfinie est une bande de fréquences UWB ou une bande de fréquences dans la plage allant de 3,1 GHz à 10,6 GHz, ou en ce que le masque de fréquences prédéfinie est un masque de fréquences UWB prédéfini, en particulier un masque de fréquences défini par des puissances d'émission moyennes autorisées au maximum dans la plage allant de 3,1 GHz à 10,6 GHz ou dans la plage allant de 6 à 8,5 GHz,
et/ou
- **en ce que** le signal d'informations est un signal vocal, un signal musical ou un signal de données de mesure.

15. Procédé selon la revendication 13, **caractérisé**
- **en ce que** le schéma de modulation et/ou le schéma de démodulation est un schéma de (dé)modulation d'amplitudes (schéma AM), un schéma par déplacement d'amplitude (schéma ASK), un schéma de (dé)modulation de fréquence (schéma FM), un schéma par déplacement de fréquence (schéma FSK), un schéma de (dé)modulation par changement de phase (schéma PSK), en particulier un schéma PSK binaire (schéma BPSK) ou un schéma de (dé)modulation à quatre phases (schéma QPSK), ou un schéma de (dé)modulation d'amplitude en quadrature (schéma QAM),
et/ou
- **en ce que** la bande de fréquences prédéfinie est une bande de fréquences UWB ou une bande de fréquences dans la plage allant de 3,1 GHz à 10,6 GHz ou en ce que le masque de fréquences prédéfinie est un masque de fréquences UWB prédéfini, en particulier un masque de fréquences défini par des puissances d'émission moyennes autorisées au maximum dans la plage de 3.1 GHz à 10,6 GHz ou dans la plage allant de 6 à 8,5 GHz,
et/ou
- **en ce que** le signal d'informations est un signal vocal, un signal musical ou un signal de données de mesure.
